Europäisches Patentamt

European Patent Office

Office européen des brevets

(19)

(11) **EP 0 588 741 B1**

(12) # FASCICULE DE BREVET EUROPEEN

(45) Date de publication et mention
de la délivrance du brevet:
**26.05.1999 Bulletin 1999/21**

(51) Int Cl.⁶: **H04H 1/00**, H04L 5/06,
H04B 7/06

(21) Numéro de dépôt: **93460028.9**

(22) Date de dépôt: **16.09.1993**

(54) **Système de diffusion de signaux numériques à génération active de la diversité en temps, émetteur et récepteur correspondants**

System zur Rundsendung von Digitalsignalen bei Zeitdiversity, entsprechende Sender und Empfänger

System for broadcasting digital signals with active time diversity and corresponding transmitter and receiver

(84) Etats contractants désignés:
**DE GB**

(30) Priorité: **18.09.1992 FR 9211360**

(43) Date de publication de la demande:
**23.03.1994 Bulletin 1994/12**

(73) Titulaires:
• **FRANCE TELECOM
75015 Paris (FR)**
• **TELEDIFFUSION DE FRANCE SA
75932 Paris Cédex 15 (FR)**

(72) Inventeurs:
• **Castelain, Damien
F-35000 Rennes (FR)**
• **Le Floch, Bernard
F-35000 Rennes (FR)**

(74) Mandataire: **Vidon, Patrice
Cabinet Patrice Vidon,
Immeuble Germanium,
80, Avenue des Buttes-de-Coesmes
35700 Rennes (FR)**

(56) Documents cités:
• **IEEE TRANSACTIONS ON CONSUMER ELECTRONICS vol. 35, no. 3 , Août 1989 , NEW YORK US pages 493 - 503 LE FLOCH, ET AL. 'DIGITAL SOUND BROADCASTING TO MOBILE RECEIVERS'**
• **IEEE ICC 86,TORONTO,CA, 22-25 juin 1986, pages 60-64, S. YOSHIDA ET AL. 'ARTIFICIAL DELAY INSERTION DIVERSITY TO EXTEND ANTI-MULTIPATH CAPABILITY OF DSK IN MOBILE RADIO'**
• **EBU REVIEW- TECHNICAL. no. 224 , Août 1987 , BRUSSELS BE pages 168 - 190 M. ALARD , ET AL. 'Principles of modulation and channel coding for digital broadcasting for mobile receivers'**
• **FUNKSCHAU. vol. 63, no. 3 , 25 Janvier 1991 , MUNCHEN DE pages 48 - 56 'Digital Audio Broadcasting- Nachfolger für den Hörfunk auf UKW'**

## Description

Le domaine de l'invention est celui de la transmission de signaux numériques.

Plus précisément, l'invention concerne les systèmes de transmission de signaux numériques capables de fonctionner en présence d'échos, voire de tirer parti de ces phénomènes d'échos pour reconstruire le signal source émis dans les récepteurs.

A titre d'exemple, le système de transmission de l'invention peut être du type du système de diffusion numérique décrit notamment dans le brevet français FR-A-2 601 210 déposé le 2 juillet 1986 et dans le document "Principes de modulation et de codage canal en radiodiffusion numérique vers les mobiles" (M. Alard et R. Lassalle ; Revue de l'U.E.R, n° 224, août 1987, pp. 168-190), et connu sous le nom de système COFDM (Coded Orthogonal Frequency Division Multiplex (multiplexage de fréquences orthogonales codées)).

Ce système COFDM, qui sera décrit plus en détail par la suite, repose notamment sur la combinaison de deux principes essentiels.

Le premier principe est la répartition de l'information à transmettre sur un grand nombre de porteuses modulées chacune à un faible débit, afin de réduire l'effet de sélectivité du canal de transmission.

Le second principe du système COFDM consiste à corréler par un procédé de codage des éléments d'information consécutifs et à les transmettre en des points distants du domaine temps-fréquence (technique de l'entrelacement en temps et en fréquence). L'éloignement de ces points est choisi de façon à assurer l'indépendance statistique entre deux éléments successifs d'un signal source.

Le codage employé est de type convolutif. Il est avantageusement associé à un décodage mettant en oeuvre un algorithme de Viterbi en décision douce.

Le système COFDM a notamment été développé dans le cadre du projet européen DAB (Digital Audio Broadcasting (diffusion audionumérique)). Il est également candidat à la normalisation pour la diffusion terrestre de la télévision numérique.

L'invention s'applique plus généralement à tous les systèmes de diffusion, qu'ils utilisent une pluralité de porteuses ou une porteuse unique (notamment lorsqu'il s'agit de systèmes large bande), dès lors que ces systèmes sont prévus pour fonctionner en présence d'échos.

Plus précisément, l'invention concerne de tels systèmes, dans lesquels un récepteur est susceptible de recevoir et de traiter des signaux portés par au moins deux voies de transmission distinctes. Par voie de transmission, on entend aussi bien des voies d'émission, correspondant à autant d'antennes d'émission, que des voies de réception, correspondant à des antennes de réception.

Il peut ainsi notamment s'agir de systèmes mettant en oeuvre des réseaux monofréquence, qui permettent d'étendre indéfiniment une zone de couverture d'un service donné, en émettant le même signal sur la même fréquence, à partir d'une pluralité d'émetteurs répartis sur la zone de couverture en question.

Un autre exemple de systèmes auxquels peut s'appliquer l'invention sont les systèmes mettant en oeuvre des réémetteurs locaux cocanal, destinés à faire disparaître les zones d'ombre non couvertes par un émetteur principal. Cette technique est bien sûr compatible avec celle des réseaux monofréquence.

Dans ces deux systèmes, un récepteur est susceptible de recevoir des signaux émis par plusieurs émetteurs, les zones de couverture des émetteurs se recouvrant au moins partiellement.

L'invention s'applique également aux systèmes de diffusion faisant appel à plusieurs antennes d'émission émettant d'un même point dans des directions différentes. En effet, il apparaît dans ce cas des zones géographiques où les champs d'émission des antennes se recouvrent, deux signaux distincts (correspondant à chacune des antennes) étant alors aussi reçus par les récepteurs.

Dans tous ces cas, qui peuvent bien sûr être combinés, un récepteur peut donc recevoir, au moins en certains lieux géographiques, des signaux émis par plusieurs sources. Ces différents signaux, correspondant chacun à une voie d'émission, constituent des "échos artificiels", que le récepteur interprète comme des échos naturels (dus par exemple à la multipropagation des signaux).

Une autre situation dans laquelle l'invention peut s'appliquer est le cas des systèmes dans lesquels au moins certains des récepteurs sont équipés d'au moins deux antennes de réception. En effet, la combinaison dans le récepteur des contributions de ces antennes, correspondant chacune à une voie de réception, sera également interprétée comme un signal reçu en présence d'échos (même lorsque le signal émis sera issu d'une voie d'émission unique).

Les systèmes capables de fonctionner en présence d'échos, tels que le COFDM, ont notamment pour objectif de permettre la réception de signaux numériques dans des mobiles, même, et en particulier, dans des milieux de transmission particulièrement hostiles, tels que les milieux urbains.

En particulier, ces systèmes doivent fonctionner dans des canaux affectés de trajets multiples, dus à la présence d'obstacles naturels (édifices, arbres, véhicules, ...). De tels canaux peuvent être modélisés par une distribution de Rayleigh ou une distribution de Rice-Nagakami (si au moins une onde reçue est d'amplitude constante). Le canal de transmission peut de plus être perturbé par des brouillages, des parasites impulsifs,...

Une autre difficulté dans la conception de tels systèmes de diffusion numérique (au départ, puisque l'on verra par la suite que l'on a su tirer parti de cette difficulté) est que, dans le cas de la réception dans des mobiles, les caractéristiques du canal de transmission varient en permanence, en fonction du déplacement de ces mobiles.

En d'autres termes, les récepteurs de tels systèmes doivent comprendre des moyens de reconstitution des données numériques émises, compensant les problèmes dus aux perturbations, et notamment aux échos induits par le canal de transmission.

Ainsi, par exemple, dans le cas du système COFDM déjà discuté, ce résultat est atteint notamment grâce à l'entrelacement en temps et en fréquence (diversité en fréquence), à l'utilisation d'un codage convolutif et à la présence d'un intervalle de garde entre deux symboles de données consécutifs.

Dans un tel système de diffusion, l'existence de trajets multiples apparaît être généralement un avantage, les récepteurs prenant en compte et exploitant les contributions correspondant à chacun de ces trajets.

Il convient de noter à ce sujet que, vu du récepteur, il n'y a aucune différence d'interprétation entre un écho naturel (dû à un obstacle quelconque) et un écho dit actif (dû à un émetteur ou à un réémetteur cocanal). En effet, le récepteur considère simplement que les signaux reçus correspondent à un unique signal source ayant suivi des trajets distincts. La présence de nombreux émetteurs ou réémetteurs est donc également le plus souvent un avantage.

Toutefois, dans certaines situations de réception, la multipropagation des signaux peut engendrer des phénomènes d'évanouissement (en anglo-saxon "fading"). Ainsi, par exemple, lorsque deux signaux arrivent simultanément dans un récepteur, ou plus précisément avec un écart de temps inférieur à la capacité de résolution en temps du récepteur, ils se combinent. Si ces deux signaux ont des puissances similaires et des phases sensiblement opposées, la résultante de signal sera quasiment nulle. La reconstruction du signal source est alors, bien sûr, très difficile, voire impossible.

Dans le cas des récepteurs mobiles, ce problème n'est pas crucial. En effet, le déplacement d'un mobile induit des variations permanentes du canal de transmission (chaque trajet de transmission varie avec le déplacement du mobile). De tels évanouissements ne sont donc que ponctuels. Ce phénomène est connu sous le nom de diversité en temps.

Au pire, ces évanouissements ponctuels ne se traduiront donc que par une interruption momentanée de la restitution du signal. De plus, les systèmes de diffusion connus, tels que le COFDM, savent pallier ces évanouissements passagers. En effet, ces systèmes mettent en oeuvre la technique de la diversité en temps, en faisant appel notamment aux techniques d'entrelacement temporel et de codage convolutif.

En revanche, dans les récepteurs fixes, ou dans les récepteurs mobiles à l'arrêt, il peut se présenter des situations de réception défavorables qui sont alors permanentes, la fonction de transfert du canal de transmission étant invariante du fait de l'immobilité du récepteur.

Dans la configuration la plus défavorable (très improbable dans la pratique), il peut se produire un évanouissement plat sur l'ensemble du canal de transmission. Dans ce cas, bien sûr, aucun signal n'est reçu, et donc a fortiori reconstruit.

Dans d'autres situations plus probables, la fonction de transfert du canal présente des évanouissements sélectifs, affectant seulement certaines porteuses du signal (dans le cas d'un système multiporteuse). Cela pose également des problèmes, notamment lorsque plusieurs porteuses affectées par ces évanouissements sélectifs sont présentées consécutivement au décodeur, après un éventuel désentrelacement temporel et fréquentiel, celui-ci ne pourra restituer un signal décodé correct, même si un code convolutif est utilisé. Cette situation se présentant en permanence, contrairement à ce qui se produit dans le cas des récepteurs mobiles, la reconstruction du signal sera très perturbée, voire impossible.

L'invention a notamment pour objectif de pallier ces inconvénients des systèmes de diffusion connus.

Plus précisément, l'invention a pour objectif de fournir un système de diffusion de signaux numériques dans lesquels la réception dans les récepteurs fixes est améliorée.

Notamment, l'invention vise à fournir un tel système qui ne soit pas pris en défaut en permanence dans des récepteurs immobiles, du fait d'une fonction de transfert du canal de transmission présentant une configuration défavorable.

En particulier, un objectif de l'invention est de fournir un tel système, du type des systèmes capables de traiter des signaux reçus en présence d'échos, dans lequel la réception dans un récepteur immobile présente des caractéristiques identiques, ou proches, de celles de la réception dans un récepteur mobile.

Un autre objectif de l'invention est de fournir un tel système qui soit compatible avec les normes de diffusion numériques existantes ou en cours d'élaboration, et en particulier avec la norme du système COFDM.

En d'autres termes, l'invention vise en particulier à apporter une solution à un problème nouveau, jamais encore considéré par l'homme du métier, à savoir l'introduction et l'utilisation de la technique de la diversité en temps dans des récepteurs immobiles.

Par ailleurs, l'invention a également pour objectif de fournir un tel système qui ne perturbe en aucun cas la réception, en particulier dans les mobiles. Ainsi, les améliorations apportées à la réception dans les récepteurs immobiles ne doivent pas l'être au détriment de la réception dans les mobiles.

Un autre objectif est encore de fournir un tel système, dont les éléments caractéristiques spécifiques soient optionnels, aussi bien en ce qui concerne les émetteurs que les récepteurs.

Un objectif particulier de l'invention est ainsi de fournir un tel système, qui ne nécessite aucune adaptation des récepteurs, par rapport aux récepteurs connus.

Un autre objectif particulier de l'invention est de fournir un tel système, qui permette de définir au moins deux types de récepteurs, l'un au moins étant équipé pour une réception efficace même lorsqu'il est immobile.

Ces objectifs, ainsi que d'autres qui apparaîtront par la suite, sont atteints selon l'invention à l'aide d'un système de diffusion de signaux numériques comprenant au moins un émetteur émettant vers au moins un récepteur immobile dans l'espace,
système dans lequel un même signal source est susceptible d'être transmis à un récepteur par l'intermédiaire d'au moins deux antennes correspondant chacune à une voie de transmission, chacune desdites voies portant un signal représentatif dudit signal source, lesdits signaux représentatifs du signal source portés par lesdites voies étant ensuite combinés dans ledit récepteur afin de restituer un signal utile combiné unique correspondant audit signal source, et dans lequel un module spécifique de traitement, dit module de génération de diversité en temps, est associé à au moins une desdites voies, ledit module induisant artificiellement une modification contrôlée et variable dans le temps du signal porté par ladite voie de façon que, pour un récepteur immobile dans l'espace, ledit signal utile combiné présente une réponse en fréquence variable dans le temps, ladite modification étant en outre telle qu'elle n'empêche pas de restituer un signal utile correspondant audit signal source dans un récepteur à partir du signal porté par une seule et quelconque desdites voies.

Ainsi, selon l'invention, les signaux reçus par un récepteur ont subi un traitement supplémentaire, par rapport aux systèmes de transmission connus. Ce traitement consiste en fait à introduire une "perturbation" ou une "altération" (ces termes ne devant bien sûr pas être pris dans un sens négatif, puisqu'ils ne correspondent pas à une détérioration du signal reconstruit, mais au contraire à une amélioration de la reconstruction) variable dans le temps du signal porté par différentes voies de transmission. De cette façon, le signal reconstruit dans un récepteur par combinaison des signaux portés par plusieurs voies présente des caractéristiques qui varient dans le temps, même lorsque ce récepteur est à l'arrêt.

En d'autres termes encore, l'invention propose de générer artificiellement (c'est-à-dire, de façon active) des modifications des signaux transmis correspondant à celles qui apparaissent naturellement lorsqu'un récepteur se déplace dans l'espace. De cette façon, le système de l'invention permet aux récepteurs immobiles de profiter du phénomène de diversité en temps, sans que ceux-ci se déplacent. Du fait des modifications variables des signaux induites par le système de l'invention, la fonction de transfert du canal est en effet variable.

Il convient de noter que l'invention repose sur une approche tout à fait nouvelle du problème de la diversité en temps. En effet, l'homme du métier a toujours considéré que ce phénomène était une conséquence du déplacement des mobiles, que l'on pouvait éventuellement exploiter, mais non contrôler et créer. L'homme du métier a donc toujours estimé que la diversité en temps n'était pas utilisable dans les récepteurs immobiles. Au contraire, l'invention génère la diversité en temps, de façon active, afin qu'elle soit exploitable dans ces récepteurs immobiles.

Bien sûr, ce phénomène de la diversité en temps "généré" n'est utilisable que lorsque le récepteur reçoit des signaux correspondant à deux voies de transmission distinctes, ayant subis des modifications de génération de diversité en temps indépendantes. C'est à cette condition seulement que le signal combiné pris en compte par le récepteur se comporte comme un signal transmis dans un canal variant dans le temps.

Cette contrainte n'est pas importante en pratique. En effet, elle correspond au cas le plus répandu. De plus, lorsqu'un récepteur ne reçoit qu'une seule voie, c'est qu'il se trouve relativement proche d'un émetteur. Dans ce cas, le signal est reçu avec une puissance importante, et les problèmes dus aux évanouissements ne se posent généralement pas.

Il est à noter par ailleurs que la notion de voies de transmission correspond à deux situations distinctes. Il peut en effet s'agir de voies d'émission, correspondant à des émetteurs situés en des emplacements distincts ou à des antennes d'émission distinctes, ou de voies de réception, dans le cas où le récepteur est associé à deux antennes de réception spatialement distinctes. Dans ces deux situations, qui peuvent d'ailleurs bien sûr être mises en oeuvre simultanément, le résultat est identique, vu du récepteur. En effet, ce récepteur reçoit plusieurs contributions correspondant à au moins deux voies distinctes aux caractéristiques variant dans le temps de façon indépendante. Il est indifférent, pour le récepteur, que ces variations soient induites lors de l'émission ou lors de la réception.

Ainsi, dans le cas de systèmes de diffusion dans lesquels un même signal source est transmis par l'intermédiaire d'au moins deux antennes d'émission émettant chacune le même signal modulé par une même fréquence de modulation et correspondant chacune à une voie d'émission (cas des réseaux porteuses notamment), chacune desdites voies portant un signal représentatif dudit signal source, un module de génération de diversité en temps peut être associé à au moins une desdites voies d'émission, ledit module induisant artificiellement une modification contrôlée et variable dans le temps du signal destiné à être porté par ladite voie d'émission. Un récepteur, même équipé d'une antenne unique, reçoit alors des signaux distincts correspondant auxdites au moins deux voies d'émission, qu'il interprète et traite comme des signaux soumis à des multitrajets variant dans le temps.

De même, dans les systèmes dans lesquels au moins un des récepteurs est associé à au moins deux antennes de réception, correspondant chacune à une voie de réception, chacune desdites voies de réception portant un signal représentatif dudit signal source, lesdits signaux portés par chacune desdites voies de réception étant ensuite combinés dans ledit récepteur afin de restituer un signal utile combiné unique correspondant audit signal source, un module de génération de diversité en temps peut être associé à au moins une desdites voies de réception, ledit module induisant artificiellement une modification contrôlée et variable dans le temps du signal porté par ladite voie de réception. A nouveau, pour un récepteur immobile dans l'espace, ledit signal combiné présente alors une réponse en fréquence variable dans le temps.

Dans un premier mode de réalisation avantageux de l'invention, ledit module de génération de diversité en temps comprend des moyens d'application d'un retard de durée variant dans le temps au signal porté par au moins une desdites voies.

Ainsi, un récepteur immobile reçoit un signal qui a subi un traitement tout à fait similaire, vu du récepteur, à celui que subi un signal reçu selon des trajets plus ou moins longs et variant dans le temps dans un récepteur mobile.

Dans le cas de systèmes dans lequel ledit signal source est constitué de symboles de données successifs, tel que par exemple le système COFDM déjà cité, il est avantageux que lesdits moyens d'application d'un retard agissent sur lesdits symboles de données pour délivrer des symboles de données sélectivement retardés.

De façon préférentielle, la durée dudit retard varie de façon aléatoire. Ainsi, il est sûr que les signaux correspondant aux différentes voies varient indépendamment l'une de l'autre, et que, en conséquence, la combinaison de ces signaux varient dans le temps.

Avantageusement, si le système de diffusion est du type appliqué à la transmission de trames de symboles de données consécutifs, la durée dudit retard est sensiblement constante sur la période d'une trame.

Cette condition est notamment importante si les récepteurs mettent en oeuvre une démodulation différentielle, qui impose de comparer chaque symbole à son prédécesseur.

Si, ainsi que cela est le cas dans le système COFDM, ces trames débutent chacune par un symbole nul, ne portant aucune information, il est avantageux que ladite durée du retard soit modifiée pendant ledit symbole nul. Ainsi, la démodulation différentielle n'est pas perturbée.

Préférentiellement, lorsque ledit signal source se présente sous la forme d'échantillons numériques successifs dans au moins une chaîne de traitement associé à au moins une desdites voies, lesdits moyens d'application d'un retard de durée variable retardent sélectivement chacun desdits échantillons numériques.

Cela peut par exemple être réalisé à l'aide d'un registre à décalage à M positions alimenté par une première série d'échantillons numériques consécutifs et de moyens de sélection de l'une des sorties dudit registre parmi les M sorties correspondant à chacune desdites M positions, délivrant une seconde série d'échantillons numériques sélectivement retardés, lesdits moyens de sélection étant contrôlés par des moyens de gestion de ladite durée du retard.

Un autre mode de réalisation avantageux et particulièrement simple à mettre en oeuvre peut consister en des moyens de mémorisation (tels qu'une mémoire RAM classique) d'une série d'échantillons numériques consécutifs et des moyens de contrôle de l'adressage desdits moyens de mémorisation, de façon que la durée entre l'écriture et la lecture d'un échantillon soit variable.

Dans un autre mode de réalisation des moyens de retard selon l'invention, ledit retard peut présenter une durée continûment variable, et être appliqué aussi bien par des moyens analogiques que numériques. Si une démodulation différentielle est mise en oeuvre, cette variation continue devra bien sûr être lente par rapport au débit des symboles.

De façon avantageuse, ladite durée du retard est sensiblement comprise entre 0 et $T_s/50$, $T_s$ étant la durée de chacun des symboles constituant lesdits signaux numériques. Ainsi, la perturbation induite est suffisamment faible pour ne pas empêcher l'interprétation du signal porté par chaque voie prise indépendamment (notamment dans le cas où une seule voie est prise en compte).

Dans un autre mode de réalisation avantageux de l'invention, ledit module de génération de diversité en temps comprennent des moyens d'application d'un déphasage variable aux signaux portés par au moins une desdites voies.

De cette façon, lorsque les signaux correspondant à plusieurs voies sont combinés dans un récepteur, la situation dans laquelle les phases des signaux se combinent de façon défavorable ne se présente jamais en permanence.

Préférentiellement, lesdits moyens d'application d'un déphasage comprennent des moyens de déphasage analogique sur l'intervalle $[0, 2\pi]$ des signaux portés par au moins une desdites voies, contrôlés par un signal de contrôle du déphasage.

Avantageusement, ledit signal de contrôle du déphasage est un signal de bruit basse fréquence. De cette façon, l'indépendance entre les différentes voies est assurée. Toutefois, un signal de contrôle déterministe peut également être utilisé, du moment que ce signal est indépendant d'une voie à l'autre.

Dans le cas d'un signal source constitué de symboles de données consécutifs, ledit signal de bruit est préférentiellement limité à une fréquence maximale sensiblement inférieure ou égale à 5/(1000.$T_s$), $T_s$ étant la durée de chacun desdits symboles de données. Cette limite est importante pour que le signal porté par chacune des voies soit interprétable pris indépendamment.

Avantageusement, lesdits moyens d'application d'un déphasage variable agissent sur des signaux transposés en fréquence intermédiaire et/ou en radiofréquence. Le déphasage variable produit des effets similaires dans les deux situations.

De façon préférentielle, ledit au moins un émetteur comprend des moyens de codage desdits signaux numériques délivrant une série d'éléments de données codés successifs et des moyens d'entrelacement en temps desdits éléments de données codés.

Dans ce cas, la diversité en temps généré selon l'invention permet de compenser les éventuels évanouissements passagers, notamment si lesdits moyens de codage mettent en oeuvre un code convolutif.

Dans un mode de réalisation préférentiel de l'invention, ledit au moins un émetteur comprend des moyens de codage desdits signaux numériques délivrant une série d'éléments de données codés successifs, des moyens de modulation de chacune des fréquences porteuses d'une pluralité de fréquences porteuses orthogonales émises simultanément et des moyens d'affectation sélective à chacune desdites fréquences porteuses d'un jeux distincts d'éléments de données codés extraits de ladite série d'éléments de données codés de façon que lesdits éléments de données soient entrelacés en fréquence.

Ce type de système de diffusion correspond notamment au système COFDM.

L'invention concerne également bien sûr tous les émetteurs et récepteurs équipés selon l'invention de moyens de génération de la diversité en temps.

D'autres caractéristiques et avantages de l'invention apparaîtront à la lecture de la description suivante de plusieurs modes de réalisation de l'invention, donnés à titre d'exemples illustratifs et non limitatifs, et des dessins annexés dans lesquels :

- la figure 1 est un schéma synoptique global d'un système de diffusion de signaux COFDM de type connu;
- la figure 2 illustre la structure du signal transmis dans le système de diffusion de la figure 1 ;
- la figure 3 est un exemple schématique d'un réseau de diffusion monofréquence à réémetteur cocanal, dans lequel les récepteurs sont susceptibles de recevoir des signaux émis par plusieurs sources ;
- les figures 4A et 4B présentent deux cas de réception de deux fréquences correspondant à deux trajets, selon que l'écart entre les deux composantes est supérieur ou inférieur à la capacité de résolution en temps du récepteur ;
- la figure 5 présente le principe de l'utilisation de la diversité en temps, pour compenser les évanouissements passagers du canal de transmission, à l'aide des techniques d'entrelacement en temps et de codage convolutif ;
- la figure 6 est un exemple de fonction de transfert de canal présentant une configuration de réception défavorable dans le cas d'un récepteur immobile, en l'absence des moyens de génération active de la diversité en temps selon l'invention ;
- la figure 7 illustre schématiquement un premier mode de réalisation des moyens de l'invention, à base d'application de retards de durée variable ;
- les figures 8 et 9 sont les schémas de deux exemples différents de mise en oeuvre du premier mode de réalisation de la figure 7, correspondant respectivement à l'utilisation d'un registre à décalage et à l'utilisation d'une mémoire vive ;
- la figure 10 présente schématiquement un second mode de réalisation des moyens de l'invention, consistant en l'application de déphasages variables au signal modulé ;
- les figures 11 et 12 sont deux exemples schématiques de mise en oeuvre du second mode de réalisation de la figure 10, correspondant respectivement à l'application d'un déphasage variable en fréquence intermédiaire et en radiofréquence;
- les figures 13 et 14 illustrent deux modes de réalisation de récepteurs à diversité en temps générée selon l'invention, mettant en oeuvre respectivement des moyens similaires à ceux présentés dans les figures 7 et 10.

Avant de présenter en détail plusieurs modes de réalisation préférentiels de l'invention, on rappelle tout d'abord ci-dessous les caractéristiques principales du système de diffusion COFDM, auquel s'applique avantageusement l'invention, puis on décrit le phénomène des évanouissements et la façon de les compenser, en exploitant la diversité en temps du canal de transmission.

Il est à noter, cependant, que l'invention ne se limite en aucun cas à ce système de diffusion particulier, présenté seulement à titre d'exemple, mais peut au contraire s'appliquer à tous les systèmes de diffusion capable de fonctionner en présence d'échos.

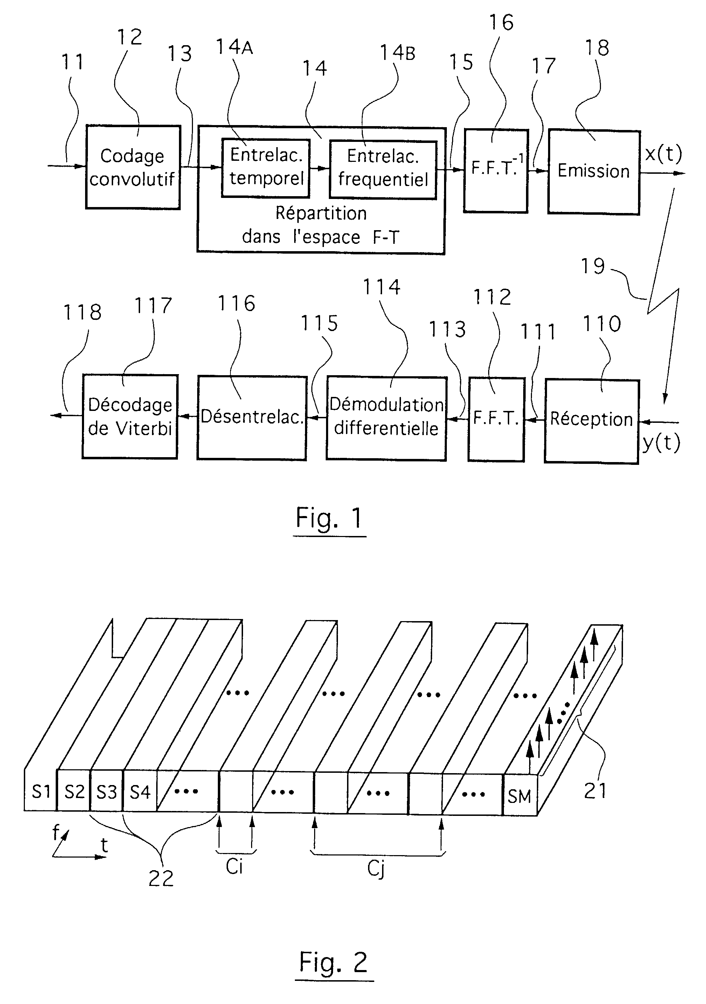

La figure 1 est donc un schéma synoptique d'une chaîne d'émission et de réception d'un système mettant en oeuvre la technique COFDM. Les caractéristiques de ce système de diffusion sont notamment décrites dans l'article "Principes de modulation et de codage canal en radiodiffusion numérique vers les mobiles" déjà cité.

Le système de diffusion numérique COFDM est basé sur l'utilisation conjointe d'un dispositif de codage de canal et d'un procédé de modulation par multiplexage de fréquences orthogonales.

Le codage canal met en oeuvre un code convolutif.

Le procédé de modulation proprement dit de ce système connu permet de s'affranchir des problèmes liés à la sélectivité en fréquence du canal. Il consiste à assurer la répartition d'éléments numériques constitutifs du signal de données dans l'espace fréquence-temps et à émettre simultanément des jeux d'éléments numériques sur une pluralité de voies de diffusion parallèles au moyen d'un multiplex de fréquences utilisant des porteuses orthogonales. En particulier, ce type de modulation permet d'éviter que deux éléments successifs du train de données soient émis à la même fréquence.

Ainsi, les données numériques source 11 à transmettre sont soumises à un codage convolutif 12. Le principe général d'un tel code est d'associer à chaque valeur source une valeur codée dépendante de cette valeur source et d'au moins une des valeurs qui la précède. Du fait du lien ainsi créé entre les valeurs codées, il est alors possible, au décodage, de reconstruire la séquence des valeurs source même lorsqu'une valeur codée reçue est fausse, à l'aide d'un décodage à maximum de vraisemblance, tel qu'un décodage de Viterbi à décision douce (c'est-à-dire un décodage délivrant une estimation de la valeur reçue et une pondération représentative de la confiance que l'on peut accorder à cette estimation).

Avantageusement, un code externe du type Reed-Solomon ou CSRS (Cyclotomatically Shortened Reed Solomon (code de Reed Solomon cyclotomatiquement raccourci)) peut être concaténé au code convolutif.

Les données source peuvent bien sûr être de tout type, qu'il s'agisse de signaux sonores, de signaux d'images ou de signaux de données. Elles peuvent de plus correspondre à plusieurs sources d'origines distinctes, émises simultanément. Ainsi, par exemple, la demande de brevet FR 90 16383 déposée le 19.12.1990 au nom des mêmes déposants propose une organisation des données en trames et en canaux permettant d'assurer notamment la transmission simultanée de plusieurs canaux sonores (correspondant par exemple aux canaux stéréophoniques de plusieurs stations de radio), d'images fixes ou animées, d'informations de type télétexte, de signaux de radiomessagerie, etc...

Comme on l'a déjà précisé, le système COFDM repose sur l'utilisation simultanée d'une pluralité de fréquences porteuses émises simultanément. Le nombre N de porteuses peut être quelconque. Il est classiquement de l'ordre de quelques centaines (il pourrait également être de l'ordre de quelques unités). Chacune de ces porteuses est modulée à un faible débit (par rapport au débit nécessaire pour un système monoporteuse correspondant). Cela permet de réduire l'effet de sélectivité du canal.

Le signal global émis est donc un signal large bande (occupant par exemple une bande de quelques Mégahertz).

Cette bande large est un avantage, dans le cas de systèmes conçus pour tirer parti des trajets multiples, tel que le COFDM. En effet, du fait de l'étalement de la réponse du canal de transmission, il est très improbable qu'un évanouissement profond affecte simultanément l'ensemble du signal.

A titre d'exemple, dans une bande de fréquence de 8 MHz, on peut définir 512 fréquences porteuses séparées de 15 625 Hz. Parmi celles-ci 448 sont utilisables, après élimination de la fréquence centrale du spectre et des porteuses latérales (1/8e du spectre) pour tenir compte des contraintes de filtrage.

Dans ce système COFDM, et contrairement aux méthodes classiques de multiplexage en fréquence, les spectres des différentes porteuses se recouvrent mutuellement. Toutefois, le signal complet vérifie certaines conditions d'orthogonalité, permettant la séparation des informations associées aux différentes porteuses, par exemple en utilisant la technique de la transformation de Fourier (ainsi que cela est précisé plus loin). En d'autres termes, la notion d'orthogonalité des fréquences porteuses sous-entend que les spectres des porteuses peuvent se chevaucher, à la condition que, lorsqu'un des spectres présente sa puissance maximale, c'est-à-dire à la fréquence précise de la porteuse correspondant à ce spectre, tous les autres spectres ont une puissance nulle. Le décodage n'est donc pas perturbé si l'on considère cette fréquence précise.

L'interférence intersymbole introduite notamment par les trajets multiples lors de la transmission peut affaiblir cette orthogonalité. Pour éviter ce problème, on insère un intervalle de garde (pendant lequel aucun décodage n'est effectué) entre chaque symbole émis. La durée de cet intervalle de garde est choisie supérieure à l'étalement de la réponse impulsionnelle du canal.

Le module de codage 12 délivre des éléments de données codées $C_k$ 13 appartenant à un alphabet de modulation. Le choix de l'alphabet spécifie le type de modulation utilisé. Par exemple, pour une modulation à 4 états de phase (MDP4), l'alphabet utilisé est {1 + i, 1 - i, -1 + i, -1 - i}. De nombreux autres types de modulation peuvent être utilisés, tels que les modulations MDP8, 16QAM ou les modulations par codage en treillis selon la méthode d'Ungerboeck.

Les éléments de données codés 13 sont ensuite soumis à une opération 14 de répartition dans l'espace fréquence-temps, qui consiste à associer à chacune des fréquences porteuses des éléments de données sélectionnés dans la suite des données codées 13 de façon à briser, par brassage, la corrélation des distorsions subies par les échantillons transmis. Par espace temps-fréquence, on entend un ensemble de points répartis selon deux axes perpendiculaires, l'axe du temps et l'axe des fréquences. Selon l'axe des fréquences, on distingue autant de points qu'il y a de fréquences porteuses. Selon l'axe du temps, un point correspond à la durée d'un symbole.

Par exemple, cette répartition assure au minimum que deux données source successives ne soient pas transmises consécutivement et/ou sur une même fréquence porteuse. Plus généralement, l'éloignement dans l'espace temps-fréquence entre deux données codées successives est au minimum tel que l'indépendance statistique entre ces données soit assurée.

Dans la pratique, cette répartition 14 dans l'espace temps-fréquence peut correspondre à un entrelacement en temps $14_A$ consistant par exemple en une application sélective de retards de différentes durées, suivi d'un entrelacement en fréquences $14_B$, consistant en une affectation sélective des éléments de données retardés aux différentes porteuses.

Chaque fréquence porteuse est ensuite modulée par la séquence d'éléments de données $C_k$ qui lui est destinée après l'entrelacement en temps et en fréquence 14. Cette opération de modulation peut être effectuée par l'application d'une transformation de Fourier rapide inverse ($FFT^{-1}$) 16 sur la suite 15 d'éléments de données entrelacés délivrée par le module 14.

Le module de transformation inverse 16 délivre des symboles élémentaires de modulation 17 correspondant à la modulation simultanée des N fréquences porteuses et destinés chacun à être transmis pendant l'intervalle de temps $T_s = t_s + \Delta$, où $t_s$ est la durée du symbole "utile", sur laquelle portera la démodulation et où $\Delta$ représente la durée de l'intervalle de garde (par exemple : $\Delta = T_s/4$).

Ces symboles 17 sont ensuite émis, de façon classique, à l'aide d'un module d'émission 18 classique, qui effectue notamment la conversion numérique/analogique des symboles 17, puis une transposition du signal analogique correspondant dans le domaine des radiofréquences.

Chaque symbole émis x(t) peut s'écrire :

$$x(t) = \sum_{k=0}^{N-1} Re\ (C_k \cdot e^{2i\pi f_k t}) \qquad pour\ t \in [0, T_s]$$

où

$$f_k = f_0 + k/t_s$$

et avec :

N :    nombre de porteuses du multiplex de porteuses orthogonales ;
$f_0$ :    fréquence arbitraire ;
$C_k$ :    élément de l'alphabet de modulation.

Le signal émis dans un canal de transmission 19 (présentant généralement des trajets multiples) est reçu dans un module de réception 110, également classique.

Si l'intervalle de garde est plus long que la réponse impulsionnelle du canal, et si celui-ci varie lentement par rapport à la durée $T_s$ d'un symbole (invariance du canal pendant la durée d'un symbole), chaque symbole reçu (non affecté par l'interférence intersymbole) peut se mettre sous la forme :

$$y(t) = \sum_{k=0}^{N-1} Re\ (H_k \cdot C_k^{2i\pi f_k t})$$

où $H_k$ représente la réponse du canal 19 à la fréquence $f_k$.

Dans le module de réception 110, le signal reçu est démodulé sur les voies en phase et en quadrature d'un oscillateur local de transposition à la fréquence $f_0 + 1/(2T)$ et échantillonné par un convertisseur analogique/numérique au rythme de 1/T, avec $T = t_s/N$.

Le signal 111 obtenu s'écrit :

$$x(nT) = (-1)^n \cdot \sum_{k=0}^{N-1} C_k \cdot H_k \cdot e^{2i\pi \frac{nk}{N}} \qquad (n = 0 \, \grave{a} \, n-1)$$

Ce signal 111 est soumis à une transformation inverse (FFT$^{-1}$) 112, symétrique de la transformation 16. Cette transformation 112 délivre les sonnées 113 suivantes :

$$H_k \cdot C_k = \sum_{n=0}^{N-1} (-1)^n z(nT) \cdot e^{-2i\pi \frac{nk}{N}} \, sur \, l'ensemble \, [(-1)^n z(nT)]_{n=0 \, \grave{a} \, N-1}$$

Ces données 113 sont ensuite démodulées (114). La démodulation peut être cohérente ou différentielle. Dans le cas d'une démodulation différentielle 114, et si l'on pose :

$$Y_{j,k} = H_{j,k} \cdot C_{j,k}$$

où l'indice j représente la dimension temporelle, la démodulation consiste à utiliser au rang j un estimateur simplifié du canal déduit du rang j-1 :

$$\tilde{H}_{j,k} = Y_{j-1,k} / Y_{j-1},k.$$

On obtient donc les éléments de données estimées $\tilde{C}_{j,k} = Y_{j,k} / \tilde{H}_{j,k}.$

Ces éléments de données 115 sont ensuite soumis à un module de désentrelacement 116, effectuant les opérations inverses du module 14, de façon à reconstituer l'ordre d'origine des symboles, qui sont ensuite dirigés dans un module de décodage 117, effectuant un décodage à maximum de vraisemblance a posteriori, tel qu'un décodage de Viterbi à décision douce.

En effet, dans la pratique, il apparaît toujours du bruit lors de la transmission des signaux. Le signal reçu doit donc alors s'écrire :

$$Y_{j,k} = H_{j,k} \cdot C_{j,k} + N_{j,k}$$

où $N_{j,k}$ est un bruit gaussien complexe dont chaque composante possède une variance $\sigma^2_{j,k}.$

Le décodage selon le critère de maximum de vraisemblance a posteriori consiste alors à minimiser l'expression :

$$\sum_j \sum_k \| Y_{j,k} - H_{j,k} \cdot C_{j,k} \|^2 / (2.\sigma^{2_{j,k}})$$

Le module de décodage fournit ainsi, après un éventuel décodage du code concaténé, si un tel code a été mis en oeuvre à l'émission, le signal 118 correspondant au signal source 11.

Dans le système COFDM, les symboles transmis sont avantageusement organisés en trames de symboles. La figure 2 présente, à titre d'exemple, une telle structure. Plus précisément, la figure 2 illustre une trame constituée de M symboles successifs.

Chaque trame débute avantageusement par trois symboles particuliers S1, S2 et S3 dont le rôle est précisé par la suite. Elle comprend ensuite un certain nombre de symboles utiles S4 à SM, comprenant chacun N porteuses orthogonales modulées 21.

Le symbole S1 est un symbole nul, permettant d'une part d'effectuer une synchronisation analogique, et d'autre part d'effectuer l'analyse spectrale du canal de diffusion. Le symbole S2 est un second symbole de synchronisation constitué par un multiplex non modulé de toutes les fréquences porteuses, à enveloppe sensiblement constante. Il permet de recaler plus précisément la synchronisation par analyse de la réponse impulsionnelle du canal. Le rôle et le mode de réalisation de ces symboles S1 et S2 sont décrits dans le brevet FR 88 15216, déposé le 18.11.88, au nom des mêmes déposants.

Bien sûr, ces symboles de synchronisation ne sont pas obligatoires vis-à-vis de l'invention.

Le symbole S3 est quant à lui un symbole de vobulation, donnant une référence de phase pour la démodulation de chaque porteuse des symboles suivants, lorsque celles-ci sont modulées différentiellement.

Le cas échéant, la trame peut également être découpée en canaux (Ci, Cj) regroupant par exemple un nombre variable de symboles.

Enfin, chaque symbole débute par un intervalle de garde 22, pendant lequel aucun décodage n'est effectué. Il permet de supprimer les pertes d'orthogonalité dues aux interférences intersymboles.

Ainsi qu'on l'a déjà mentionné, le système COFDM est conçu pour fonctionner en présence de trajets multiples. Cette caractéristique avantageuse permet la mise en oeuvre de réseaux de diffusion monofréquences (en ce qui concerne la fréquence d'émission du signal).

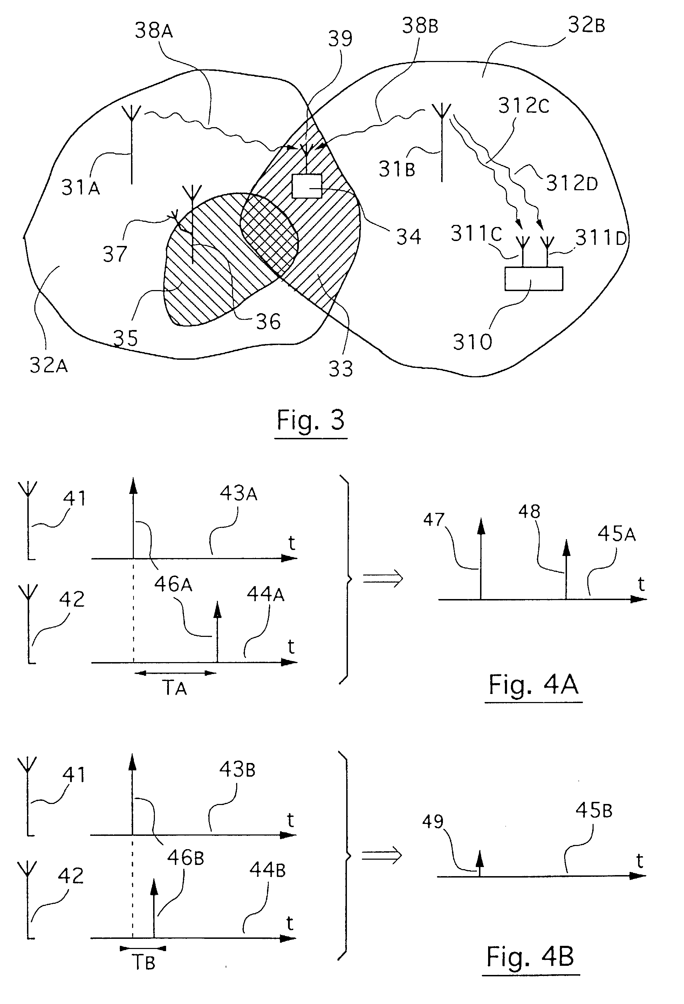

La figure 3 illustre, de façon schématique, le principe de tels réseaux monofréquences. Sur cette figure, on a représenté deux émetteurs $31_A$ et $31_B$, ayant respectivement une couverture géographique $32_A$ et $32_B$. Bien sûr, dans la réalité, le nombre d'émetteurs est beaucoup plus important, et choisi de façon à couvrir un territoire donné.

De façon classique, ces couvertures $32_A$ et $32_B$ présentent une zone de recouvrement 33, dans laquelle les signaux émis par les deux émetteurs $31_A$ et $31_B$ peuvent être reçus par un récepteur 34. Dans les systèmes de diffusion actuellement mis en oeuvre, il est nécessaire que chaque émetteur ait une fréquence d'émission distincte. Sinon, les deux signaux reçus simultanément par le récepteur 34 se combinent de façon non interprétable.

Au contraire, dans le cas du système COFDM, et plus généralement de tout système capable de fonctionner en présence d'échos, tous les émetteurs peuvent utiliser la même fréquence d'émission. En effet, le récepteur 34 interprète alors les contributions $38_A$ et $38_B$ des deux émetteurs $31_A$ et $31_B$ reçues sur son antenne 39 comme des échos naturels, dont il sait tirer parti.

Les deux contributions $38_A$ et $38_B$ correspondent, selon la terminologie utilisée dans la présente demande, à deux voies d'émission distinctes.

Le principe des réseaux monofréquences revient donc à générer des échos actifs (interprétés comme des échos naturels), à partir d'un ensemble d'émetteurs répartis sur un territoire donné. Outre les avantages évidents qu'apporte cette technique en ce qui concerne notamment l'allocation des ressources (l'attribution d'une fréquence d'émission unique suffit, et le territoire couvert peut être virtuellement étendu indéfiniment), elle apparaît également avantageuse vu des récepteurs, puisque ceux-ci tirent généralement avantage de la présence d'échos.

La figure 3 présente également une autre situation dans laquelle ce principe peut être utilisé, à savoir la suppression des zones d'ombre. Une zone d'ombre est une zone géographique 35 incluse dans un territoire 32, normalement couvert par un émetteur donné $31_A$, et dans laquelle aucun signal n'est reçu. Il peut par exemple s'agir d'une zone masquée par la présence d'un immeuble.

Dans ce cas, on utilise un réémetteur cocanal 36, qui comprend une antenne de réception 37 (placée hors de la zone d'ombre) et des moyens de réamplification directe sur la même fréquence du signal reçu, couvrant la zone d'ombre.

A nouveau, dans ce cas, il existe des espaces géographiques dans lesquels des signaux émis par plusieurs émetteurs et/ou réémetteurs peuvent être reçus simultanément.

Par ailleurs, la figure 3 présente le cas d'un récepteur 310 équipé de deux antennes de réception distinctes $311_C$ et $311_D$. Même lorsqu'un tel récepteur se situe dans une zone géographique couverte par un seul émetteur $31_B$, il reçoit deux contributions distinctes $312_C$ et $312_D$, sur les antennes $311_C$ et $311_D$ respectivement. Ces deux contributions correspondent à deux voies de réception, et sont interprétés dans le récepteur, après combinaison, comme des échos naturels.

Il est à noter que, dans la pratique, chacun des signaux portés par une des voies d'émission ou de réception est bien sûr soumis à des échos naturels. Le signal combiné dans un récepteur est donc la combinaison de plusieurs signaux correspondant à des échos naturels et/ou à des échos actifs.

Bien que, en règle générale, la présence de trajets multiples se traduit de façon avantageuse dans les récepteurs, il peut apparaître des situations défavorables où cela présente un inconvénient.

Un exemple d'une telle situation est illustré schématiquement par les figures 4A et 4B, qui présentent respectivement deux situations de réception correspondant à la réception de signaux issus de deux émetteurs (correspondant à deux voies d'émission 41 et 42) ou reçus sur deux antennes de réception (correspondant à deux voies de réception).

Dans le cas de la figure 4A, le récepteur reçoit donc les contributions $43_A$ et $44_A$ correspondant à deux voies distinctes 41 et 42. La courbe $45_A$ illustre la combinaison de ces deux contributions.

La composante $46_A$ est reçue par la voie 42 avec un retard $T_A$ par rapport à la voie 41. Ce retard $T_A$ étant supérieur à la capacité de résolution en temps $T_R$ du récepteur, c'est-à-dire à la capacité de discrimination entre deux composantes, la résultante $45_A$ comporte deux composantes distinctes 47 et 48 dont le récepteur effectuera une addition en puissance (d'où l'intérêt de la présence de trajets multiples).

En revanche, dans le cas particulier de la figure 4B, la composante $46_B$ est reçu sur la voie 42 avec un très léger retard $T_B$ par rapport à la voie 41. Si ce retard $T_B$ est inférieur à la capacité de résolution en temps $T_R$, la résultante $45_B$ ne comprend qu'une composante 49 correspondant à l'addition des deux composantes des voies $43_B$ et $44_B$.

Dans certains cas, cela n'a pas de conséquences fâcheuses. En revanche, une combinaison défavorable des phases des contributions de chaque émetteur peut aboutir à un signal résultant $45_B$ très atténué. C'est notamment le cas lorsque les contributions sont de puissances similaires et de phases opposées. Ce phénomène correspond à un évanouissement plat dans la bande du signal.

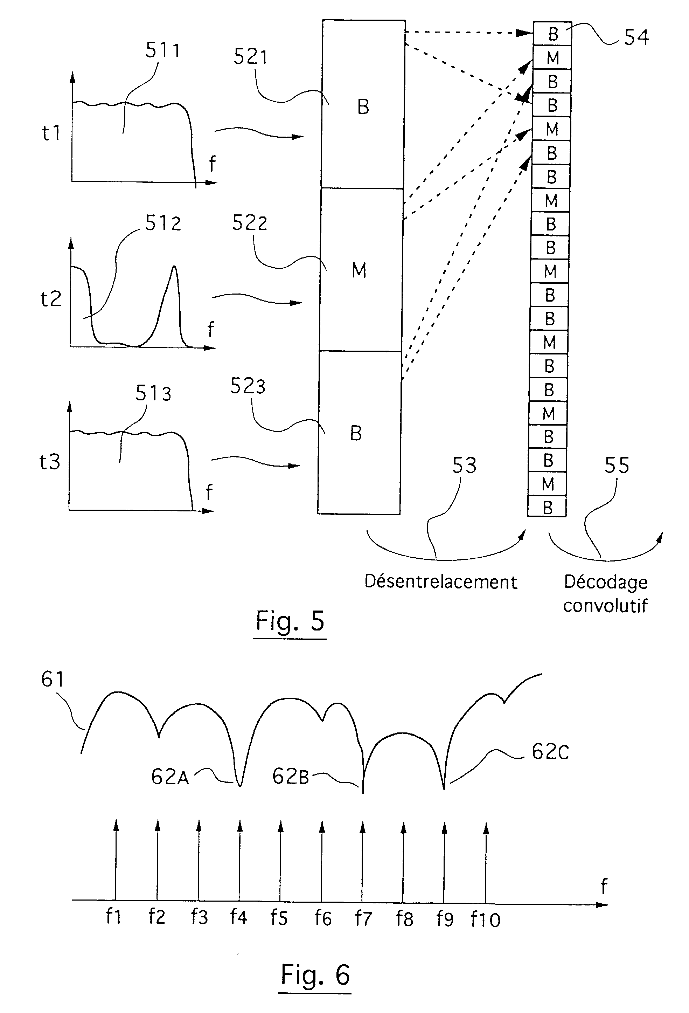

En règle générale, il est toutefois rare que l'ensemble du signal émis soit perdu, du fait que celui-ci est émis sur une bande de fréquence très large. En revanche, il est classique que certaines fréquences porteuses constituant le signal émis subissent des évanouissement sélectifs, tels que cela est par exemple illustré par la figure 6, discutée par la suite.

Lorsque le récepteur est mobile, le problème des évanouissements n'est pas crucial. En effet, les conditions de réception change en permanence, du fait des variations des caractéristiques du canal de transmission. Les trajets pris en compte et les retards entre ces trajets varient continuellement. En conséquence, une situation d'évanouissement n'est que ponctuelle. Cette caractéristique est connue sous le nom de diversité en temps.

La figure 5 montre de quelle façon ces évanouissements ponctuels sont combattus dans le système COFDM, grâce aux techniques d'entrelacement et de codage convolutif.

On considère trois instants de réception successifs t1, t2 et t3 dans un mobile en déplacement. Aux instants t1 et t3, le signal $51_1$ et $51_3$ est bien reçu, ce qui conduit à la récupération d'éléments de données corrects $52_1$ et $53_3$ (indicés par la lettre B, pour bon). En revanche, le signal $51_2$ a subi un évanouissement (par simplification, on considère le cas d'un évanouissement sur l'ensemble de la bande. Toutefois le principe reste le même dans le cas d'évanouissements sélectifs). Les éléments de données correspondants $52_2$ ne sont donc pas reconstructibles (indicés par la lettre M, pour mauvais).

Si aucun traitement particulier n'est effectué, cela se soldera par une interruption passagère du signal restitué. En revanche, si l'on effectue un désentrelacement 53 (correspondant bien sûr à un entrelacement préalable), on génère un brassage 54 des éléments de données bons (B) et mauvais (M). Si ces éléments de données ont été codés par codage convolutif, un décodage 55 à maximum de vraisemblance a posteriori permet de reconstituer la séquence complète des éléments de données.

Ainsi, les phénomènes d'évanouissements ne posent pas de problème dans le cas des récepteurs en mouvement, du fait de la diversité en temps du canal.

Dans le cas d'un récepteur fixe, ou d'un récepteur mobile à l'arrêt, cela peut en revanche entraîner des situations catastrophiques, du point de vue de la reconstruction du signal. On comprend en effet aisément, au regard de la figure 5, qu'un récepteur positionné en permanence à l'emplacement correspondant à l'instant de réception t2 recevra en permanence un signal soumis à un évanouissement plat. Dans cette situation, il est clair que, quels que soient les traitements en aval, aucun signal utile ne pourra être restitué.

La figure 6 illustre le cas plus probable d'un canal présentant des évanouissements sélectifs. A titre d'exemple, on a représenté un signal constitué de dix porteuses $f_1$ à $f_{10}$, transmis dans un canal invariant (du fait de l'immobilité du récepteur) illustré par sa fonction de transfert 61.

Cette fonction de transfert présente trois évanouissements $62_1$, $62_B$ et $62_C$ affectant respectivement les porteuses $f_4$, $f_7$ et $f_9$. Contrairement au cas des mobiles, où de tels évanouissements ne sont que ponctuels, dans le temps, ces porteuses $f_4$, $f_7$ et $f_9$ seront toujours affectées, et ne pourront donc jamais être décodées.

Si le mécanisme de désentrelacement prévoit de lire successivement ces trois porteuses (par exemple, si le chemin de désentrelacement est : instant $t_1$ : lecture de $f_9$ ; instant $t_2$: lecture de $f_4$ ; instant $t_3$: lecture de $f_7$), le dispositif de décodage à maximum de vraisemblance risque d'être pris en défaut. Cette situation est d'autant plus perturbatrice que cette situation se présentera à intervalles réguliers.

Il apparaît donc que la qualité de la réception est, en moyenne, meilleure dans le cas des récepteurs mobiles que dans le cas des récepteurs fixes, du fait de la diversité en temps du canal de transmission en cas de mouvement.

L'invention apporte une solution à ce problème des récepteurs fixes. Plus précisément, l'invention répond au problème suivant : comment faire profiter les récepteurs immobiles des avantages liés à la diversité en temps ?

Il est à noter que la formulation de ce problème est, en elle-même, tout à fait nouvelle et inventive. En effet, l'homme du métier a toujours considéré que la diversité en temps n'était qu'une conséquence du déplacement des récepteurs. Elle pouvait être exploitée, ainsi qu'on l'a déjà montré, mais non contrôlée ou générée. Un récepteur fixe ne pouvait donc pas en bénéficier.

Selon l'invention, en revanche, le phénomène de la diversité en temps a été analysé sous un nouvel angle, de façon que les récepteurs fixes puissent également l'exploiter. On sait en effet que la diversité en temps tient au fait que les trajets multiples pris en compte par les récepteurs mobiles présentent des caractéristiques variant continuellement.

Le problème revient donc à faire en sorte que les récepteurs reçoivent également des signaux transmis selon les trajets qui varient dans le temps. En d'autres termes, il faut simuler un déplacement du récepteur fixe.

Ce résultat est obtenu, selon l'invention, en faisant varier légèrement et de façon indépendante les signaux portés par plusieurs voies distinctes, de façon que la combinaison de ces signaux présente des caractéristiques variant au cours du temps, même dans un récepteur fixe.

Il convient de noter qu'il s'agit d'une approche tout à fait originale des systèmes de diffusion. En effet, de tout temps, l'homme du métier a eu pour objectif d'émettre un signal le plus parfait possible, par rapport aux spécifications établies. Au contraire, l'invention propose de modifier ce signal "parfait", c'est-à-dire de le perturber, ou de l'altérer, volontairement, de façon contrôlée.

Ainsi qu'on le verra par la suite, les voies soumises à ces modifications de "génération active" de la diversité en temps peuvent se situer à plusieurs emplacements de la chaîne de transmission. Plus précisément, il peut s'agir de voies d'émission, correspondant chacune à une antenne d'émission ou à un émetteur distinct, ou de voies de réception, correspondant à autant d'antennes de réception.

En effet, vu du récepteur, les signaux transmis auront subi des modifications simulant des trajets variables avant d'être décodés. Peu importe le moment où ont été appliquées ces modifications.

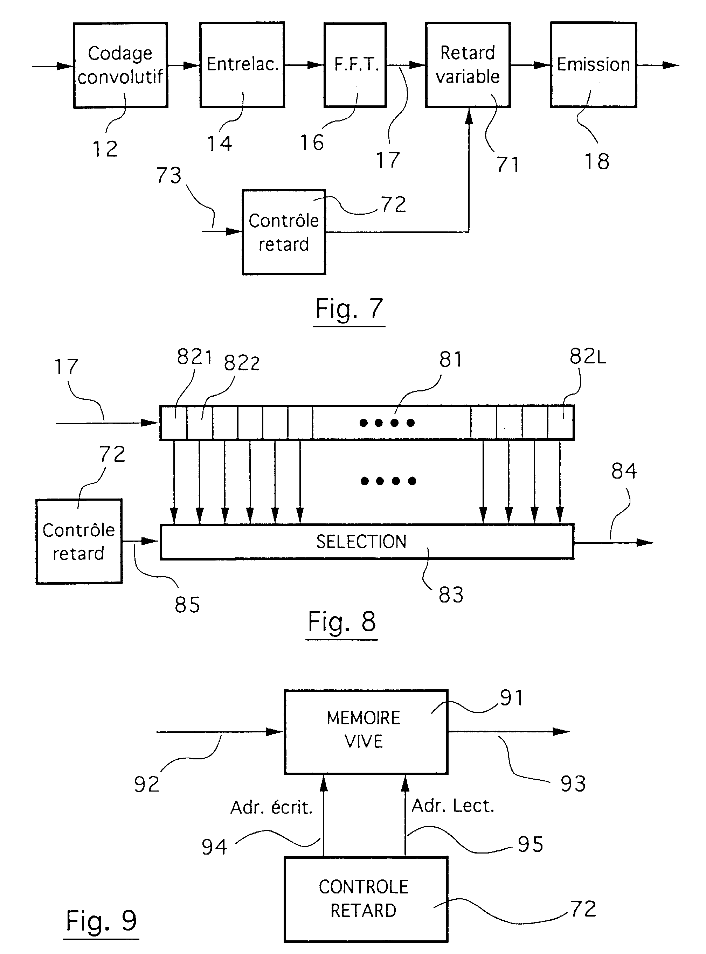

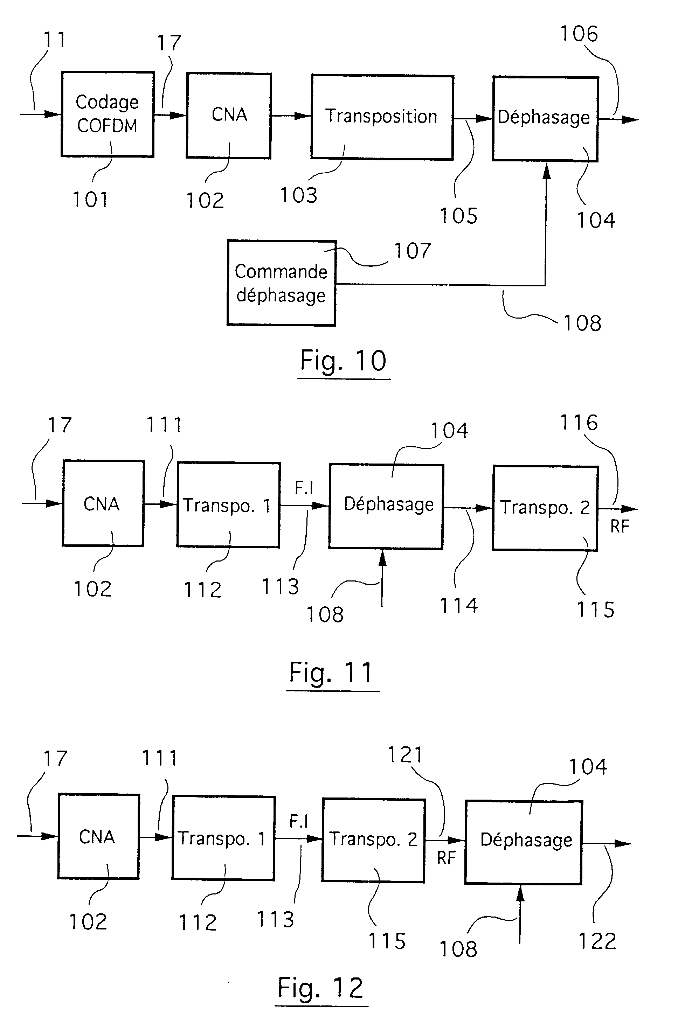

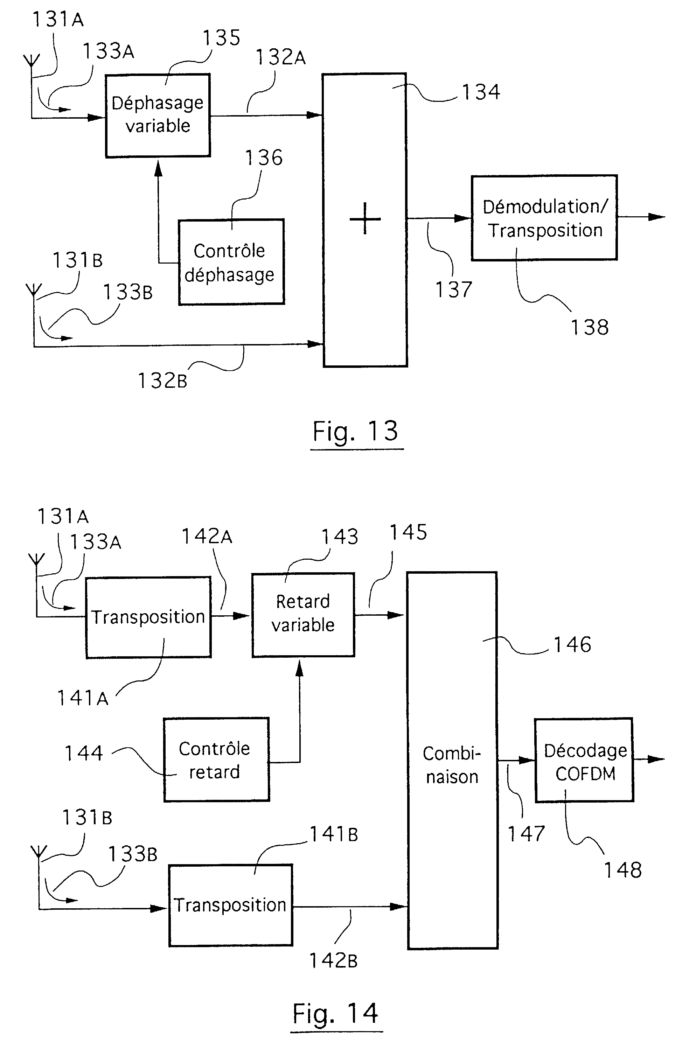

Les figures 7 et 10 présentent ainsi deux exemples de mises en oeuvre correspondant à des voies d'émission, et les figures 13 et 14 sont deux exemples correspondant à des voies de réception.

De plus, ces modifications peuvent être introduites en différents emplacements de la chaîne de traitement (dans un émetteur ou dans un récepteur), et en particulier sur les symboles et/ou sur le signal modulé. Ces modifications peuvent consister aussi bien en des traitements numériques qu'en des traitements analogiques.

Dans un premier mode de réalisation de l'invention, le traitement de génération de diversité en temps peut donc être effectué au niveau des émetteurs. En se référant à la figure 3, on comprend aisément que si les signaux émis par les émetteurs $31_A$ et $31_B$ présentent des caractéristiques légèrement différentes et variant au cours du temps, le récepteur 34 fixe placé dans la zone de recouvrement 33 reconstruira un signal aux caractéristiques variables, tout à fait similaire au signal qu'il recevrait s'il se déplaçait. En d'autres termes, les modifications induites à l'émission génèrent artificiellement de la diversité en temps.

Bien sûr, il faut pour cela que chaque émetteur induise des modifications de façon indépendante des autres émetteurs, pour que les combinaisons de signaux. Dans le cas de la figure 3 d'ailleurs, il suffirait qu'un seul des émetteurs produise ces modifications. Toutefois, dans la pratique, on fera en sorte qu'au moins tous les émetteurs principaux (par distinction avec les réémetteurs) comprennent des moyens de génération de diversité en temps.

Le principe de l'invention n'est évidemment exploité que dans les zones géographiques 33, 35 où au moins deux signaux indépendants, correspondant à des antennes distinctes (ou voies) sont susceptibles d'être reçus simultanément. En pratique, cela ne pose pas de problème particulier, puisque ces cas sont les plus fréquents, et que lorsqu'un seul signal est reçu, c'est que le récepteur est proche de l'émetteur correspondant. La puissance reçue est alors forte, et les risques d'évanouissement sont en conséquence très faibles.

L'invention peut également être mise en oeuvre au niveau d'un unique émetteur, dès lors que cet émetteur comprend plusieurs antennes d'émission. Si ces antennes d'émission émettent dans des directions différentes, les récepteurs fixes bénéficieront des avantages de l'invention dans les zones où les champs d'émission des antennes se recouvrent.

Selon une technique spécifique à l'invention, un même émetteur peut également disposer d'au moins deux antennes d'émission émettant dans des directions identiques, de façon qu'il soit possible de bénéficier de la diversité en temps générée activement selon l'invention sur tout la zone de couverture de cet émetteur.

Dans tous les cas, les modifications apportées au signal doivent bien sûr être telles qu'elles n'induisent aucune perturbation de la réception, lorsqu'une seule voie est reçue.

La figure 7 présente un premier mode de réalisation de moyens de génération de diversité en temps selon l'invention, consistant à retarder de façon variable dans le temps les symboles destinés à être émis. Vu d'un récepteur fixe, le signal reçu aura plus au moins de retard, de la même façon que lorsque la durée d'un trajet varie pour un récepteur mobile.

Pour ce faire, on ajoute au système de la figure 1 des moyens 71 d'application d'un retard de durée variable aux symboles.

Dans l'exemple de la figure 7, ces moyens 71 sont insérés entre la transformation de Fourier 16, qui délivre les symboles 17, et les moyens d'émission 18. Ils peuvent toutefois trouver place à de nombreux autres emplacements de la chaîne de transmission, depuis le module de codage convolutif 12 jusqu'au module d'émission 18. Le signal peut en effet être retardé à tout moment de son traitement.

Les moyens 71 d'application d'un retard sont pilotés par des moyens 72 de contrôle de la durée du retard, qui font varier régulièrement cette durée. Cette variation peut suivre une fonction déterministe, à partir du moment où celle-ci est indépendante d'un émetteur à l'autre. Toutefois, elle suivra avantageusement une fonction aléatoire, permettant d'assurer aisément l'indépendance entre les émetteurs et évitant que certaines situations défavorables se représentent régulièrement.

La variation des retards peut consister en une sélection d'un retard parmi un jeu de retards disponibles. Deux exemples de traitement numérique de ce type sont décrits plus loin, en relation avec les figures 8 et 9. Un traitement analogique peut également être mis en oeuvre, le retard variant alors par exemple de façon continue, sous la commande des moyens 72 de contrôle.

Dans le cas où une démodulation différentielle est utilisée dans les récepteurs, on comprend aisément que des retards variant de façon importante d'un symbole à l'autre perturberaient fortement la démodulation. En effet la démodulation d'un symbole à l'instant t dépend du symbole reçu à l'instant t-1.

Une première solution à ce problème est de faire appel à des retards variant continûment et de façon très lente. Une seconde solution, dans le cas où les symboles sont organisés en trames de symboles, tel que cela est illustré en figure 2, est d'utiliser un retard constant pendant toute la durée d'une trame, au début de chaque trame, pendant l'émission du symbole de silence S1. Il n'y a alors aucun problème de démodulation différentielle, le symbole S3 portant des références de démodulation.

D'une façon générale, la durée maximale $D_{max}$ du retard est choisi de façon que ce retard ne perturbe pas de façon importante le signal émis, et notamment n'empêche pas la reconstruction des données source lorsque seulement des signaux correspondant à un émetteur unique sont reçus.

Ainsi, il est souhaitable que cette durée maximale $D_{max}$ soit très inférieure à la durée d'un symbole. Par exemple, on choisira $D_{max}$ inférieur ou égal à $T_s/50$, $T_s$ étant la durée d'un symbole. La table I donne, à titre indicatif, les valeurs applicables dans le cas du système défini dans le cadre du projet européen DAB, pour lequel trois modes sont prévus.

TABLE I

|  | $T_S$ | retard d |
|---|---|---|
| Mode I | 1,25 ms | $0 \le d \le 25\ \mu s$ |
| Mode II | 312,5 $\mu s$ | $0 \le d \le 6,25\ \mu s$ |
| Mode III | 156,25 $\mu s$ | $0 \le d \le 3\ \mu s$ |

La figure 8 présente un premier mode de réalisation des moyens 71 et 72 d'application et du contrôle du retard. Les symboles 17 sont présentés à l'entrée d'un registre à décalage 81 comprenant L cellules $82_1$ à $82_L$.

Ce registre 81 est décalé au rythme de $D_{max}/L$, $D_{max}$ étant la durée maximum du retard. Ainsi, L retards distincts sont applicables, égaux à $k.D_{max}/L$, k variant de 1 à L. La valeur L peut par exemple être comprise entre 20 et 50.

Un module 83 de sélection d'une des L cellules $82_1$ à $82_L$ délivre aux moyens d'émission 18 les symboles 84 retardés de la durée correspondante. Ce module 83 est contrôlé, ainsi que cela a déjà été décrit, par les moyens 72 de contrôle du retard, qui délivre par exemple un nombre 85 tiré aléatoirement entre 1 et L à chaque nouveau début de trame.

Un autre mode de réalisation des moyens 71 et 72 est illustré en figure 9. Il est basé sur l'utilisation d'une mémoire vive (RAM) 91 de type classique, alimenté par les symboles échantillonnés 92 au rythme $D_{max}/L$, $D_{max}$ étant la durée maximale d'un retard et L le nombre de retards distincts souhaités. Les valeurs pouvant être identiques à celles indiquées en relation avec le mode de réalisation de la figure 8.

Les échantillons 92 sont inscrits séquentiellement dans la mémoire 91 puis relus avec le retard voulu, pour fournir les symboles retardés 93. Le retard est contrôlé de façon particulièrement simple par les moyens 72 de contrôle du retard qui précise à chaque instant d'échantillonnage une adresse d'écriture 94 (pour l'échantillon en entrée 92) et une adresse de lecture 95 (pour l'échantillon retardé 99). Le retard appliqué correspond à l'écart entre l'adresse de lecture 95 et l'adresse d'écriture 94.

Ainsi qu'on l'a déjà précisé, de nombreux autres moyens sont envisageables pour mettre en oeuvre les retards contrôlés selon l'invention, qu'il s'agisse de moyens numériques ou de moyens analogiques.

Par ailleurs, l'invention ne se limite pas à l'application de retards de durées variables. En effet, plusieurs autres techniques sont envisageables pour générer la diversité en temps. Notamment, il est possible d'utiliser des déphasages variables du signal modulé, ainsi que cela est illustré en figure 10.

On a vu, en relation avec la figure 4B, que dans certaines conditions (signaux de phases opposées) la sommation des contributions de plusieurs voies pouvaient être défavorable, alors que, dans d'autres situations (signaux en phase), elle pouvait être bénéfique. En faisant évoluer dans le temps les phases des signaux transmis, on comprend que les situations défavorables ne peuvent plus se présenter en permanence.

La figure 10 présente le principe général de cette technique. Le module 101 de codage COFDM correspond sensiblement au regroupement des modules 12, 14 et 16 de la figure 1. Il associe classiquement aux données source 11 des symboles à émettre 17. Les modules 102 de conversion numérique/analogique et 103 de transposition dans le domaine des radiofréquences correspondent sensiblement quant à eux au module 18 d'émission de la figure 1.

Selon l'invention, on applique un déphasage 104 variant dans le temps au signal 105 délivré par le module 103 de transposition, pour produire le signal à émettre 106. Cela revient à produire un signal dont la fréquence porteuse varie très légèrement dans le temps. Les récepteurs savent traiter ces variations, tant qu'elles sont suffisamment lentes pour ne pas induire d'effet Doppler trop important.

La valeur du déphasage varie donc sur l'intervalle [0, 2π], sous le contrôle d'un signal de commande 108 délivré par des moyens 107 de commande de déphasage. Cette variation évolue à une fréquence maximale $f_{max}$ égale à quelques Hertz ou dizaines de Hertz, de façon à ne par régénérer un effet Doppler trop important.

Par exemple, on choisira $f_{max}$ inférieur ou égal à $5/(1000.T_s)$, $T_s$ étant la durée d'un symbole. Dans le cas du projet DAB déjà cité, ces fréquences maximales sont précisées dans la table II suivante :

TABLE II

|  | $T_s$ | $f_{max}$ |
|---|---|---|
| Mode I | 1,25 ms | 4 Hz |
| Mode II | 312,5 µs | 16 Hz |
| Mode III | 156,25 µs | 32 Hz |

Le signal de déphasage 108 est un signal analogique variant régulièrement. Il peut s'agir d'un signal déterministe quelconque, indépendant d'un émetteur à l'autre, ou d'un signal aléatoire, c'est-à-dire, en d'autres termes, d'un signal de bruit basse fréquence.

Dans le cas des systèmes d'émission classiques comprenant deux étages de transposition, correspondant respectivement aux transpositions en fréquence intermédiaire (FI) et en radiofréquence (RF), le déphasage variable selon l'invention peut être appliqué indifféremment en fréquence intermédiaire ou en radiofréquence, ainsi que cela est illustré sur les figures 11 et 12 respectivement.

Dans le mode de réalisation présenté en figure 11, le signal 111 converti analogiquement par le convertisseur 102 est donc transposé en un signal en fréquence intermédiaire 113 par un premier module de transposition 112, qui est déphasé selon la technique de l'invention par le module de déphasage 104 déjà décrit. Le signal déphasé 114 est ensuite transposé en radiofréquence par un second module de transposition 115 qui délivre le signal 116 destiné à être émis.

Selon le mode de réalisation de la figure 12, le signal 111 délivré par le convertisseur 102 est également transposé en un signal en fréquence intermédiaire 113 par un premier module de transposition 112. Ce signal 113 est ensuite directement transposé par un second module de transposition 115 en un signal en radiofréquence 121, qui est soumis au déphasage 104 de l'invention, avant d'être émis (122).

Les deux techniques de génération de diversité en temps décrites ci-dessus (introductions de retards et de déphasages variables) peuvent bien sûr être combinées dans un émetteur. Sur un même réseau de diffusion, certains émetteurs peuvent comprendre des moyens d'application de retards, d'autres des moyens de déphasages, d'autres encore les deux types de moyens, et les derniers aucun de ces moyens.

Par ailleurs, l'invention ne se limite pas à la génération de la diversité en temps dans des émetteurs. Des moyens similaires peuvent être en effet mis en oeuvre directement dans des récepteurs, pour peu que ceux-ci soient équipés d'au moins deux antennes de réception (cette technique est classiquement utilisée pour bénéficier de la diversité d'espace).

Pour des raisons de coût, il est clair qu'il est plus avantageux que l'invention soit directement implantée dans les émetteurs, le nombre d'émetteurs étant très inférieur au nombre de récepteurs. Toutefois, il peut se présenter des situations (normalisation, système déjà existant, ...) où cela n'est pas possible. Dans ce cas, certains récepteurs pourront être équipés de moyens de génération de la diversité en temps, et notamment les récepteurs destinés à être fixes.

Cela permet par ailleurs de définir deux types de récepteur, avec ou sans de tels moyens. En d'autres termes, la présence de moyens de génération de diversité en temps dans un récepteur est une caractéristique supplémentaire avantageuse, valorisant ce récepteur.

Il est clair enfin que de tels récepteurs peuvent très bien coexister dans un système de diffusion dont les émetteurs mettent également en oeuvre la diversité en temps.

Les figures 13 et 14 illustrent schématiquement deux modes de réalisation de récepteurs selon l'invention, mettant en oeuvre respectivement des moyens correspondant sensiblement aux moyens des émetteurs présentés en relation avec les figures 10 et 7.

Dans le mode de réalisation représenté en figure 13, le récepteur est équipé de deux antennes de réception $131_A$ et $131_B$, de façon que deux voies de réception $132_A$ et $132_B$ indépendantes soient prises en compte par le récepteur. De façon classique, cela permet de tirer parti de la diversité d'espace (le canal de transmission associé à chaque antenne étant distinct, on obtient généralement un gain sur les bilans d'énergie).

Le signal $133_B$ reçu par l'antenne $131_B$ est transmis directement à un additionneur 134. En revanche le signal $133_A$ reçu par l'antenne $131_A$ est soumis à un déphasage variable, par un module de déphasage 135 similaire au module 104 déjà décrit en liaison avec la figure 10, et contrôlé par un module 136 de commande de déphasage (similaire au module 107 de la figure 10).

Les deux voies $132_A$ et $132_B$ sont ensuite, classiquement, additionnées par l'additionneur 134, qui délivre un signal résultant 137, démodulé et décodé de façon classique dans le module 138 de décodage COFDM.

Il est à noter que, vu du module 138 de décodage, il n'y a aucune différence entre un signal soumis à la diversité en temps du fait du déplacement d'un mobile ou d'un signal pour lequel la diversité en temps est généré à l'émission ou à la réception. Par ailleurs, ces trois modes de diversité en temps peuvent bien sûr cohabiter.

Dans le mode de réalisation de la figure 14, le récepteur comprend également deux antennes de réception $131_A$ et $131_B$ qui délivrent chacune le signal reçu $133_A$ et $133_B$ à un module de transposition, respectivement $141_A$ et $141_B$, qui transpose le signal reçu en radiofréquences en un signal $142_A$, $142_B$ en bande de base.

Le signal $142_A$ est ensuite soumis à des retards de durée variable, à l'aide d'un module 143 d'application de retard similaire au module 71 de la figure 7, contrôlé par un module 144 de contrôle de la durée su retard similaire au module 72 de la figure 7. Le module 143 délivre un signal retardé 145, qui est combiné au signal $142_B$ correspondant à la seconde antenne $131_B$ dans un combineur 146. Le signal combiné 147 est ensuite décodé de façon classique, dans un module 148 de décodage COFDM.

Les exemples des figures 13 et 14 peuvent bien sûr être aisément généralisés à des récepteurs comprenant plus de deux antennes (le traitement appliqué au signal reçu par chaque antenne étant alors différent et indépendant).

Par ailleurs, on rappelle que l'invention ne se limite pas aux deux techniques décrites ci-dessus à titre d'exemples (retards et déphasages), mais concerne plus généralement tous les moyens visant à générer artificiellement de la diversité en temps dans un récepteur immobile. En d'autres termes, l'invention concerne tous les systèmes de diffusion dans lesquels on peut distinguer, à l'émission et/ou à la réception, au moyen de deux voies indépendantes, et comprenant des moyens de génération de diversité en temps, par un traitement spécifique du signal porté par au moins une des voies, destiné à faire varier les caractéristiques de ce signal de façon que sa combinaison en un lieu de réception fixe avec un signal porté par une autre voie se comporte comme un signal reçu au travers d'un canal de transmission variant dans le temps.

## Revendications

1.  Système de diffusion de signaux numériques comprenant au moins un émetteur ($31_A$, $31_B$, 36) émettant vers au moins un récepteur immobile dans l'espace (34, 310), dans lequel un même signal source est susceptible d'être transmis à un récepteur immobile dans l'espace (34, 310) par l'intermédiaire d'au moins deux antennes ($31_A$, $31_B$ ; $311_C$, $311_D$) correspondant chacune à une voie de transmission ($38_A$, $38_B$ ; $312_C$, $312_D$), chacune desdites voies portant un signal représentatif dudit signal source, lesdits signaux représentatifs du signal source portés par lesdites voies étant ensuite combinés dans ledit récepteur (34, 310) afin de restituer un signal utile combiné unique correspondant audit signal source,
    caractérisé en ce qu'un module spécifique de traitement (71 ; 104 ; 135 ; 143), dit module de génération de diversité en temps, est associé à au moins une desdites voies ($38_A$, $38_B$ ; $312_C$, $312_D$), ledit module (71 ; 104 ; 135 ; 143) induisant artificiellement une modification contrôlée et variable dans le temps du signal porté par ladite voie de façon que, pour un récepteur immobile dans l'espace, ledit signal utile combiné présente une réponse en fréquence variable dans le temps,
    ladite modification étant en outre telle qu'elle n'empêche pas de restituer un signal utile correspondant audit signal source dans un récepteur à partir du signal porté par une seule et quelconque desdites voies ($38_A$, $38_B$ ; $312_C$, $312_D$).

2.  Système de diffusion de signaux numériques comprenant au moins un émetteur ($31_A$, $31_B$, 36) émettant vers au moins un récepteur immobile dans l'espace (34, 310), dans lequel un même signal source est transmis par l'intermédiaire d'au moins deux antennes d'émission ($31_A$, $31_B$) émettant chacune le même signal modulé par une même fréquence de modulation et correspondant chacune à une voie d'émission ($38_A$, $38_B$), chacune desdites voies portant un signal représentatif dudit signal source, et dans lequel un récepteur (34) est susceptible de recevoir simultanément des signaux portés par au moins deux voies d'émission ($38_A$, $38_B$), lesdits signaux portés par lesdites voies d'émission étant ensuite combinés dans ledit récepteur (34) afin de restituer un signal utile combiné unique correspondant audit signal source,

caractérisé en ce qu'un module spécifique de traitement (71 ; 104), dit module de génération de diversité en temps, est associé à au moins une desdites voies d'émission ($38_A$, $38_B$), ledit module (71 ; 104) induisant artificiellement une modification contrôlée et variable dans le temps du signal destiné à être porté par ladite voie d'émission de façon que, pour un récepteur immobile dans l'espace, ledit signal utile combiné présente une réponse en fréquence variable dans le temps,

ladite modification étant en outre telle qu'elle n'empêche pas de restituer un signal utile correspondant audit signal source dans un récepteur à partir du signal porté par une seule et quelconque desdites voies ($38_A$, $38_B$).

3. Système de diffusion de signaux numériques comprenant au moins un émetteur ($31_A$, $31_B$, 36) émettant vers au moins un récepteur immobile dans l'espace (34, 310), dans lequel au moins un desdits récepteurs (310) est associé à au moins deux antennes de réception ($31l_C$, $311_D$), correspondant chacune à une voie de réception ($312_C$, $312_D$), chacune desdites voies de réception portant un signal représentatif dudit signal source, lesdits signaux portés par chacune desdites voies de réception étant ensuite combinés dans ledit récepteur (310) afin de restituer un signal utile combiné unique correspondant audit signal source,

caractérisé en ce qu'un module spécifique de traitement (135 ; 143), dit module de génération de diversité en temps, est associé à au moins une desdites voies de réception ($312_C$, $312_D$), ledit module (135 ; 143) induisant artificiellement une modification contrôlée et variable dans le temps du signal porté par ladite voie de réception de façon que, pour un récepteur immobile dans l'espace, ledit signal utile combiné présente une réponse en fréquence variable dans le temps,

ladite modification étant en outre telle qu'elle n'empêche pas de restituer un signal utile correspondant audit signal source dans un récepteur à partir du signal porté par une seule et quelconque desdites voies ($312_C$, $312_D$).

4. Système selon l'une quelconque des revendications 1 à 3, caractérisé en ce que ledit module de génération de diversité en temps comprend des moyens (71 ; 81, 83 ; 91 ; 143) d'application d'un retard de durée variant dans le temps au signal porté par au moins une desdites voies ($38_A$, $38_B$, $312_C$, $312_D$).

5. Système selon la revendication 4, dans lequel ledit signal source est constitué de symboles de données successifs (17 ; 92), caractérisé en ce que lesdits moyens (71 ; 81, 83 ; 91 ; 143) d'application d'un retard agissent sur lesdits symboles de données (17 ; 92) pour délivrer des symboles de données sélectivement retardés (84 ; 93).

6. Système selon l'une quelconque des revendications 4 ou 5, caractérisé en ce que la durée dudit retard varie de façon aléatoire.

7. Système selon l'une quelconque des revendications 4 à 6, du type appliqué à la transmission de trames de symboles de données consécutifs, caractérisé en ce que la durée dudit retard est sensiblement constante sur la période d'une trame.

8. Système selon la revendication 7, du type appliqué à la transmission de trames débutant chacune par un symbole nul, ne portant aucune information, caractérisé en ce que ladite durée du retard est modifiée pendant ledit symbole nul.

9. Système selon l'une quelconque des revendications 4 à 8, dans lequel ledit signal source se présente sous la forme d'échantillons numériques successifs (17, 92) dans au moins une chaîne de traitement associé à au moins une desdites voies ($38_A$, $38_B$, $312_C$, $312_D$),

caractérisé en ce que lesdits moyens (81, 91) d'application d'un retard de durée variable retardent sélectivement chacun desdits échantillons numériques.

10. Système selon la revendication 9, caractérisé en ce que lesdits moyens d'application d'un retard comprennent un registre à décalage (81) à L positions ($82_1$ à $82_L$) alimenté par une première série d'échantillons numériques consécutifs (17) et des moyens (83) de sélection de l'une des sorties dudit registre (81) parmi les L sorties correspondant à chacune desdites L positions ($82_1$ à $82_L$), délivrant une seconde série d'échantillons numériques sélectivement retardés (84), lesdits moyens (83) de sélection étant contrôlés par des moyens (72) de gestion de ladite durée du retard.

11. Système selon la revendication 9, caractérisé en ce que lesdits moyens d'application d'un retard comprennent des moyens (91) de mémorisation d'une série d'échantillons numériques consécutifs (92) et des moyens (72) de contrôle de l'adressage desdits moyens (91) de mémorisation, de façon que la durée entre l'écriture et la lecture d'un échantillon soit variable.

12. Système selon l'une quelconque des revendications 4 ou 5, caractérisé en ce que ledit retard a une durée continûment variable.

13. Système selon l'une quelconque des revendications 4 à 12, caractérisé en ce que ladite durée du retard est sensiblement comprise entre 0 et $T_s/50$, $T_s$ étant la durée de chacun des symboles constituant lesdits signaux numériques.

14. Système selon l'une quelconque des revendications 1 à 13, caractérisé en ce que ledit module de génération de diversité en temps comprend des moyens (104, 135) d'application d'un déphasage variable aux signaux portés par au moins une desdites voies ($38_A$, $38_B$, $312_C$, $312_D$).

15. Système selon la revendication 14, caractérisé en ce que lesdits moyens (104, 135) d'application d'un déphasage comprennent des moyens de déphasage analogique sur l'intervalle [0,2 $\pi$] des signaux portés par au moins une desdites voies ($38_A$, $38_B$, $312_C$, $312_D$), contrôlés par un signal (108) de contrôle du déphasage.

16. Système selon la revendication 15, caractérisé en ce que ledit signal (108) de contrôle du déphasage est un signal de bruit basse fréquence.

17. Système selon la revendication 16, dans lequel ledit signal source est constitué de symboles de données consécutifs, caractérisé en ce que ledit signal de bruit est limité à une fréquence maximale sensiblement inférieure ou égale à $5/(1000.T_s)$, $T_s$ étant la durée de chacun desdits symboles de données.

18. Système selon l'une quelconque des revendications 13 à 17, caractérisé en ce que lesdits moyens (104) d'application d'un déphasage variable agissent sur des signaux transposés en fréquence intermédiaire (113) et/ou en radio-fréquence (121).

19. Système selon l'une quelconque des revendications 1 à 18, caractérisé en ce que ledit au moins un émetteur ($31_A$, $31_B$, 36) comprend des moyens (12) de codage desdits signaux numériques délivrant une série d'éléments de données codés successifs (13) et des moyens (14) d'entrelacement en temps desdits éléments de données codés (13).

20. Système selon l'une quelconque des revendications 1 à 19, caractérisé en ce que ledit au moins un émetteur ($31_A$, $31_B$, 36) comprend des moyens (12) de codage desdits signaux numériques délivrant une série d'éléments de données codés successifs (13), des moyens (16) de modulation de chacune des fréquences porteuses d'une pluralité de fréquences porteuses orthogonales (24) émises simultanément et des moyens ($14_B$) d'affectation sélective à chacune desdites fréquences porteuses d'un jeu distinct d'éléments de données codés extraits de ladite série d'éléments de données codés (13) de façon que lesdits éléments de données soient entrelacés en fréquence.

21. Système selon l'une quelconque des revendications 1 à 20, caractérisé en ce que ledit au moins un émetteur ($31_A$, $31_B$, 36) comprend des moyens (12) de codage desdits signaux numériques délivrant une série d'éléments de données codés (13), lesdits moyens (12) de codage mettant en oeuvre un code convolutif.

22. Emetteur d'un système de diffusion de signaux numériques comprenant au moins un émetteur émettant vers au moins un récepteur immobile dans l'espace, caractérisé en ce qu'il comprend des moyens (18) d'émission de signaux sur au moins une voie d'émission ($38_A$, $38_B$), et des moyens (71) de génération de diversité en temps induisant artificiellement une modification contrôlée et variable dans le temps du signal porté par au moins une desdites voies d'émission ($38_A$, $38_B$).

23. Récepteur immobile dans l'espace d'un système de diffusion de signaux numériques comprenant au moins un émetteur émettant vers au moins un récepteur immobile dans l'espace, du type associé à au moins deux antennes de réception ($311_C$, $311_D$), correspondant chacune à une voie de réception ($312_C$, $312_D$), caractérisé en ce qu'il comprend des moyens (135 ; 143) de génération de diversité en temps induisant une modification contrôlée et variable dans le temps du signal porté par au moins une desdites voies de réception.

**Patentansprüche**

1. System zum Senden digitaler Signale, das mindestens einen Sender ($31_A$, $31_B$, 36) umfaßt, der an mindestens einen räumlich unbeweglichen Empfänger (34, 310) sendet, wobei in dem System ein gleiches Quellensignal zu einem räumlich unbeweglichen Empfänger (34, 310) gesendet werden kann, und zwar über mindestens zwei Antennen ($31_A$, $31_B$; $311_C$, $311_D$), die jeweils einer Sendestrecke ($38_A$, $38_B$; $312_C$, $312_D$) entsprechen, wobei jede dieser Sendestrecken ein Signal trägt, das für das Quellensignal repräsentativ ist, wobei diese von den benannten Sendestrecken getragenen repräsentativen Signale des Quellensignals danach im Empfänger (34, 310) kombiniert werden, um ein einziges Nutzsignal wiederzugeben, das dem Quellensignal entspricht,
dadurch gekennzeichnet, daß ein spezifisches Verarbeitungsmodul (71; 104; 135; 143), genannt Erzeugungsmodul für Zeitverschiedenheit, mindestens einer der Sendestrecken ($38_A$, $38_B$; $312_C$, $312_D$) zugeordnet ist, wobei das Modul (71; 104; 135; 143) künstlich eine kontrollierte und variable zeitliche Änderung des von der Sendestrecke getragenen Signals derart induziert, daß für einen räumlich unbeweglichen Empfänger das kombinierte Nutzsignal eine zeitlich variable Frequenzantwort aufweist,
wobei diese Änderung die Wiedergewinnung eines dem Quellensignal entsprechenden Nutzsignals in einem Empfänger nicht verhindert, ausgehend von einem Signal auf einer beliebigen Sendestrecke ($38_A$, $38_B$; $312_C$, $312_D$).

2. System zum Senden digitaler Signale, das mindestens einen Sender ($31_A$, $31_B$, 36) umfaßt, der an mindestens einen räumlich unbeweglichen Empfänger (34, 310) sendet, wobei in dem System ein gleiches Quellensignal über mindestens zwei Sendeantennen ($31_A$, $31_B$) gesendet wird, welche jeweils das gleiche, von der gleichen Modulationsfrequenz modulierte Signal senden, welches jeweils einer Sendestrecke ($38_A$, $38_B$) entspricht, wobei jede dieser Sendestrecken ein für das Quellensignal repräsentatives Signal trägt, wobei in dem System ein Empfänger (34) gleichzeitig Signale empfangen kann, die von mindestens zwei Sendestrecken ($38_A$, $38_B$) getragen werden, wobei die von den Sendestrecken getragenen Signale dann im Empfänger (34) kombiniert werden, um ein einziges Nutzsignal wiederzugeben, das dem Quellensignal entspricht,
dadurch gekennzeichnet, daß ein spezifisches Verarbeitungsmodul (71; 104), genannt Erzeugungsmodul für Zeitverschiedenheit, mindestens einer der Sendestrecken ($38_A$, $38_B$) zugeordnet ist, wobei das Modul (71; 104) künstlich eine kontrollierte und variable zeitliche Änderung des Signals, welches dazu bestimmt ist, von der Sendestrecke getragen zu werden, derart induziert, daß für einen räumlich unbeweglichen Empfänger das kombinierte Nutzsignal eine zeitlich variable Frequenzantwort aufweist,
wobei diese Änderung die Wiedergewinnung eines dem Quellensignal entsprechenden Nutzsignals in einem Empfänger nicht verhindert, ausgehend von einem Signal auf einer beliebigen Sendestrecke ($38_A$, $38_B$).

3. System zum Senden digitaler Signale, das mindestens einen Sender ($31_A$, $31_B$, 36) umfaßt, der an mindestens einen räumlich unbeweglichen Empfänger (34, 310) sendet, wobei in dem System mindestens einer der Empfänger (310) mindestens zwei Empfangsantennen ($311_C$, $311_D$) zugeordnet ist, die jeweils einer Empfangsstrecke ($312_C$, $312_D$) entsprechen, wobei jede dieser Empfangsstrecken ein für das Quellensignal repräsentatives Signal trägt, wobei die jeweils von den Empfangsstrecken getragenen Signale dann im Empfänger (310) kombiniert werden, um ein einziges Nutzsignal wiederzugewinnen, das dem Quellensignal entspricht,
dadurch gekennzeichnet, daß ein spezifisches Verarbeitungsmodul (135; 143), genannt Erzeugungsmodul für Zeitverschiedenheit mindestens einer der Empfangsstrecken ($312_C$, $312_D$) zugeordnet ist, wobei das Modul (135, 143) künstlich eine kontrollierte und variable zeitliche Änderung des von der Empfangsstrecke getragenen Signals derart induziert, daß für einen räumlich unbeweglichen Empfänger das kombinierte Nutzsignal eine zeitlich variable Frequenzantwort aufweist,
wobei diese Änderung die Wiedergewinnung eines dem Quellensignal entsprechenden Nutzsignals in einem Empfänger nicht verhindert, ausgehend von einem Signal auf einer beliebigen Sendestrecke ($312_C$, $312_D$).

4. System gemäß einem der Ansprüche 1 bis 3,
dadurch gekennzeichnet, daß das Erzeugungsmodul für Zeitverschiedenheit Mittel (71; 81, 83; 91; 143) zur Anwendung einer zeitlich variierten Verzögerung auf das von mindestens einer der Strecken ($38_A$, $38_B$; $312_C$, $312_D$) getragenen Signals umfaßt.

5. System gemäß Anspruch 4, in dem das Quellensignal aus aufeinanderfolgenden Datensymbolen (17; 92) besteht,
dadurch gekennzeichnet, daß die Mittel (71; 81, 83; 91; 143) zur Anwendung einer Verzögerung auf die Datensymbole (17; 92) wirken, um selektiv verzögerte Datensymbole (84; 93) zu liefern.

6. System gemäß einem der Ansprüche 4 oder 5,
dadurch gekennzeichnet, daß die Verzögerungsdauer in rein zufälliger Weise variiert.

7.  System gemäß einem der Ansprüche 4 bis 6, welches auf das Senden von Symbolrastern von aufeinanderfolgenden Daten angewandt wird,
    dadurch gekennzeichnet, daß die Verzögerungsdauer über die Periode eines Rasters in etwa konstant ist.

8.  System gemäß Anspruch 7, welches auf das Senden von Rastern angewandt wird, die jeweils durch ein Nullsymbol anfangen, welches keine Information trägt,
    dadurch gekennzeichnet, daß die Verzögerungsdauer während des Nullsymbols geändert wird.

9.  System gemäß einem der Ansprüche 4 bis 8, in dem das Quellensignal in der Form aufeinanderfolgender abgetasteter digitaler Daten (17, 92) in mindestens einer der den Strecken ($38_A$, $38_B$; $312_C$, $312_D$) zugeordneten Verarbeitungsketten erscheint,
    dadurch gekennzeichnet, daß die Mittel (81, 91) zur Anwendung einer Verzögerung variabler Dauer alle abgetasteten digitalen Daten selektiv verzögern.

10. System gemäß Anspruch 9,
    dadurch gekennzeichnet, daß die Mittel zur Anwendung einer Verzögerung ein Schieberegister (81) mit L Stellungen ($82_1$ bis $82_L$) umfassen, das von einer ersten Reihe aufeinanderfolgender abgetasteter digitaler Daten (17) versorgt wird sowie Mittel (83) zur Auswahl eines der L Ausgänge des Registers (81), welcher einer der L Stellungen ($82_1$ bis $82_L$) entspricht, wobei eine zweite Reihe von selektiv verzögerten abgetasteten digitalen Daten (72) zur Verwaltung der Verzögerungsdauer geliefert wird, wobei die Mittel (83) von Mitteln (72) gesteuert werden, welche die Verzögerungsdauer festlegen.

11. System gemäß Anspruch 9,
    dadurch gekennzeichnet, daß die Mittel zur Anwendung einer Verzögerung Mittel (91) zum Speichern einer Reihe aufeinanderfolgender abgetasteter digitaler Daten (92) sowie Mittel (72) zur Kontrolle der Adressierung dieser Speichermittel (91) umfassen, so daß die Zeitdauer zwischen dem Schreiben und dem Lesen eines abgetasteten Wertes variabel ist.

12. System gemäß einem der Ansprüche 4 oder 5,
    dadurch gekennzeichnet, daß die Verzögerungsdauer kontinuierlich variabel ist.

13. System gemäß einem der Ansprüche 4 bis 12,
    dadurch gekennzeichnet, daß die Verzögerungsdauer in etwa zwischen 0 und $T_s/50$ liegt, wobei $T_s$ die Dauer eines jeden der Symbole ist, aus welchen die digitalen Signale zusammengesetzt sind.

14. System gemäß einem der Ansprüche 1 bis 13,
    dadurch gekennzeichnet, daß das Erzeugungsmodul für Zeitverschiedenheit Mittel (104, 135) zur Anwendung einer variablen Phasenverschiebung auf die Signale umfaßt, die von mindestens einer der Strecken ($38_A$, $38_B$; $312_C$, $312_D$) getragen werden.

15. System gemäß Anspruch 14,
    dadurch gekennzeichnet, daß die Mittel (104, 135) zur Anwendung einer Phasenverschiebung Mittel zur analogen Phasenverschiebung über das Intervall [0, $2\pi$] der Signale umfassen, die von mindestens einer der Strecken ($38_A$, $38_B$; $312_C$, $312_D$) getragen werden und die von einem Signal (108) zur Steuerung der Phasenverschiebung gesteuert werden.

16. System gemäß Anspruch 15,
    dadurch gekennzeichnet, daß es sich beim Signal (108) zur Steuerung der Phasenverschiebung um ein niederfrequentes Rauschsignal handelt.

17. System gemäß Anspruch 16, bei dem das Quellensignal aus aufeinanderfolgenden Datensymbolen besteht,
    dadurch gekennzeichnet, daß das Rauschsignal auf eine Höchstfrequenz begrenzt ist, die in etwa kleiner oder gleich $5/(1000 \cdot T_s)$ ist, wobei $T_s$ die Dauer eines jeden Datensymbols ist.

18. System gemäß einem der Ansprüche 13 bis 17,
    dadurch gekennzeichnet, daß die Mittel (104) zur Anwendung einer variablen Phasenverschiebung auf Signale wirken, die auf eine Zwischenfrequenz (113) und/oder eine Radiofrequenz (121) transponiert wurden.

**19.** System gemäß einem der Ansprüche 1 bis 18,
dadurch gekennzeichnet, daß der mindestens eine Sender ($31_A$, $31_B$, 36) Mittel (12) zum Kodieren der digitalen Signale umfaßt, welche eine Reihe von aufeinanderfolgenden kodierten Elementen (13) sowie Mittel (14) zur zeitlichen Verschachtelung dieser kodierten Datenelemente (13) liefern.

**20.** System gemäß einem der Ansprüche 1 bis 19,
dadurch gekennzeichnet, daß der mindestens eine Sender ($31_A$, $31_B$, 36) folgendes umfaßt: Mittel (12) zum Kodieren der digitalen Signale, welche eine Reihe von aufeinanderfolgenden kodierten Elementen (13) liefern, ferner Mittel (16) zum Modulieren einer jeden Trägerfrequenz aus einer Vielzahl gleichzeitig gesendeten orthogonaler Trägerfrequenzen (24) sowie Mittel ($14_B$) zur selektiven Zuordnung eines unterschiedlichen Satzes kodierter Daten zu jeder Trägerfrequenz, wobei diese Daten aus der Reihe kodierter Elemente (13) extrahiert wurden, so daß die Datenelemente frequenzverschachtelt sind.

**21.** System gemäß einem der Ansprüche 1 bis 20,
dadurch gekennzeichnet, daß der mindestens eine Sender ($31_A$, $31_B$, 36) Mittel (12) zum Kodieren der digitalen Signale umfaßt, welche eine Reihe kodierter Datenelemente (13) liefern, wobei die Kodierungsmittel (12) einen faltenden Code anwenden.

**22.** Sender eines Systems zum Senden digitaler Signale, das mindestens einen Sender umfaßt, der an mindestens einen räumlich unbeweglichen Empfänger sendet,
dadurch gekennzeichnet, daß es Mittel (18) zum Senden von Signalen über mindestens eine Sendestrecke ($38_A$, $38_B$) umfaßt sowie Mittel (71) zum Erzeugen von Zeitverschiedenheit, die künstlich eine kontrollierte und variable zeitliche Änderung des Signals induziert, welches auf mindestens einer Sendestrecke ($38_A$, $38_B$) getragenen wird.

**23.** Räumlich unbeweglicher Empfänger eines Systems zum Senden digitaler Signale, das mindestens einen Sender umfaßt, der an mindestens einen räumlich unbeweglichen Empfänger sendet, mit mindestens zwei Empfangsantennen ($311_C$, $311_D$), welche jeweils einer Empfangsstrecke ($312_L$, $312_D$) entsprechen,
dadurch gekennzeichnet, daß es Mittel (135; 143) zum Erzeugen von Zeitverschiedenheit umfaßt, die künstlich eine kontrollierte und variable zeitliche Änderung des von mindestens einer der Sendestrecken getragenen Signals induziert.

## Claims

**1.** System for broadcasting digital signals, comprising at least one transmitter ($31_A$, $31_B$, 36) transmitting to at least one spatially immobile receiver (34, 310), in which system a given source signal is capable of being transmitted to a spatially immobile receiver (34, 310) via at least two antennas ($31_A$, $31_B$; $311_C$, $311_D$) each corresponding to one transmission channel ($38_A$, $38_B$; $312_C$, $312_D$), each of the said channels carrying a signal representative of the said source signal, the said signals representative of the source signal carried by the said channels then being combined in the said receiver (34, 310) in order to reconstruct a single combined useful signal corresponding to the said source signal,
characterised in that a specific processing module (71; 104; 135; 143), termed the time diversity generation module, is associated with at least one of the said channels ($38_A$, $38_B$; $312_C$, $312_D$); the said module (71; 104; 135; 143) artificially inducing a controlled and time-variable modification of the signal carried by the said channel such that, for a spatially immobile receiver, the said combined useful signal has a time-variable frequency response, the said modification also being such that it does not impede reconstruction of a useful signal corresponding to the said source signal in a receiver starting from the signal carried by a single and any one of the said channels ($38_A$, $38_B$; $312_C$, $312_D$).

**2.** System for broadcasting digital signals, comprising at least one transmitter ($31_A$, $31_B$, 36) transmitting to at least one spatially immobile receiver (34, 310), in which system a given source signal is transmitted via at least two transmission antennas ($31_A$, $31_B$) each transmitting the same signal modulated by a given modulation frequency and each corresponding to one transmission channel ($38_A$, $38_B$), each of the said channels carrying a signal representative of the said source signal, and in which system a receiver (34) is capable of simultaneously receiving signals carried by at least two transmission channels ($38_A$, $38_B$), the said signals carried by the said transmission channels then being combined in the said receiver (34) in order to reconstruct a single combined useful signal corresponding to the said source signal,
characterised in that a specific processing module (71; 104), termed the time diversity generation module, is associated with at least one of the said transmission channels ($38_A$, $38_B$); the said module (71; 104) artificially inducing a controlled and time-variable modification of the signal intended to be carried by the said transmission channel such that, for a spatially immobile receiver, the said combined useful signal has a time-variable frequency response, the said modification also being such that it does not impede reconstruction of a useful signal corresponding to the said source signal in a receiver starting from the signal carried by a single and any one of the said channels ($38_A$, $38_B$).

3. System for broadcasting digital signals, comprising at least one transmitter ($31_A$, $31_B$; 36) transmitting to at least one spatially immobile receiver (34, 310), in which system at least one of the said receivers (310) is associated with at least two receiving antennas ($311_C$, $311_D$); each corresponding to one reception channel ($312_C$, $312_D$), each of the said reception channels carrying a signal representative of the said source signal, the said signals carried by each of the said reception channels then being combined in the said receiver (310) in order to reconstruct a single combined useful signal corresponding to the said source signal,
characterised in that a specific processing module (135; 143), termed the time diversity generation module, is associated with at least one of the said reception channels ($312_C$, $312_D$), the said module (135; 143) artificially inducing a controlled and time-variable modification of the signal carried by the said reception channel such that, for a spatially immobile receiver, the said combined useful signal has a time-variable frequency response,
the said modification also being such that it does not impede reconstruction of a useful signal corresponding to the said source signal in a receiver starting from the signal carried by a single and any one of the said channels ($312_C$, $312_D$).

4. System according to any one of Claims 1 to 3, characterised in that the said time diversity generation module comprises means (71; 81. 83; 91; 143) for applying a delay of a duration varying in time to the signal carried by at least one of the said channels ($38_A$, $38_B$, $312_C$, $312_D$).

5. System according to Claim 4, in which the said source signal is made up of successive data symbols (17; 92), characterised in that the said means (71; 81, 83; 91; 143) for applying a delay act on the said data symbols (17; 92) in order to supply selectively delayed data symbols (84; 93).

6. System according to either of Claims 4 or 5, characterised in that the duration of the said delay varies in a random manner.

7. System according to any one of Claims 4 to 6, of the type applied to the transmission of consecutive frames of data symbols, characterised in that the duration of the said delay is substantially constant over the period of one frame.

8. System according to Claim 7, of the type applied to the transmission of frames each starting with a zero symbol, not carrying any information; characterised in that the said duration of the delay is modified during the said zero symbol.

9. System according to any one of Claims 4 to 8, in which the said source signal is in the form of successive digital samples (17, 92) in at least one processing chain associated with at least one of the said channels ($38_A$, $38_B$, $312_C$, $312_D$), characterised in that the said means (81, 91) for applying a delay of variable duration selectively delay each of the said digital samples.

10. System according to Claim 9, characterised in that the said means for applying a delay comprise a shift register (81) having L positions ($82_1$ to $82_L$) fed by a first series of consecutive digital samples (17) and means (83) for selection of one of the outputs of the said register (81) from the L outputs corresponding to each of the said L positions ($82_1$ to $82_L$), supplying a second series of selectively delayed digital samples (84), the said selection means (83) being controlled by means (72) for management of the said duration of the delay.

11. System according to Claim 9, characterised in that the said means for applying a delay comprise means (91) for memorising a series of consecutive digital samples (92) and means (72) for controlling the addressing of the said memory means (91) such that the period between the writing and the reading of a sample is variable.

12. System according to either of Claims 4 or 5, characterised in that the said delay is of continuously variable duration.

13. System according to any one of Claims 4 to 12, characterised in that the said duration of the delay is essentially

between 0 and $T_s/50$, $T_s$ being the duration of each of the symbols making up the said digital signals.

14. System according to any one of Claims 1 to 13, characterised in that the said time diversity generation module comprises means (104, 135) for applying a variable phase shift to the signals carried by at least one of the said channels ($38_A$, $38_B$, $312_C$, $312_D$).

15. System according to Claim 14, characterised in that the said means (104, 135) for applying a phase shift comprise means for an analogue phase shift over the period [0.2 $\pi$] of the signals carried by at least one of the said channels ($38_A$, $38_B$, $312_C$, $312_D$), controlled by a phase shift control signal (108).

16. System according to Claim 15, characterised in that the said phase shift control signal (108) is a low frequency noise signal.

17. System according to Claim 16, in which the said source signal is made up of consecutive data symbols, characterised in that the said noise signal is restricted to a maximum frequency of essentially less than or equal to $5/(1000.T_s)$, $T_s$ being the duration of each of the said data symbols.

18. System according to any one of Claims 13 to 17, characterised in that the said means (104) for applying a variable phase shift act on signals translated to intermediate frequency (113) and/or radio frequency (121).

19. System according to any one of Claims 1 to 18, characterised in that the said at least one transmitter ($31_A$, $31_B$, 36) comprises means (12) for coding the said digital signals, supplying a series of successive coded data elements (13) and means (14) for temporal interleaving of the said coded data elements (13).

20. System according to any one of Claims 1 to 19, characterised in that the said at least one transmitter ($31_A$, $31_B$, 36) comprises means (12) for coding the said digital signals, supplying a series of successive coded data elements (13), means (16) for modulating each of the carrier frequencies of a plurality of orthogonal carrier frequencies (24) transmitted simultaneously and means ($14_B$) for selective assignment to each of the said carrier frequencies of a distinct set of coded data elements extracted from the said series of coded data elements (13) such that the said data elements are frequency-interleaved.

21. System according to any one of Claims 1 to 20, characterised in that the said at least one transmitter ($31_A$, $31_B$, 36) comprises means (12) for coding the said digital signals, supplying a series of coded data elements (13), the said coding means (12) using a convolutional code.

22. Transmitter in a system for broadcasting digital signals, comprising at least one transmitter transmitting to at least one spatially immobile receiver, characterised in that it comprises means (18) for transmitting signals on at least one transmission channel ($38_A$, $38_B$) and time diversity generation means (71) artificially inducing a controlled and time-variable modification of the signal carried by at least one of the said transmission channels ($38_A$; $38_B$).

23. Spatially immobile receiver in a system for broadcasting digital signals, comprising at least one transmitter transmitting to at least one spatially immobile receiver, of the type associated with at least two reception antennas ($311_C$, $311_D$) each corresponding to one reception channel ($312_C$, $312_D$), characterised in that it comprises time diversity generation means (135; 143) inducing a controlled and time-variable modification of the signal carried by at least one of the said reception channels.

Fig. 1

Fig. 2

Fig. 3

Fig. 4A

Fig. 4B

Désentrelacement    Décodage
                    convolutif

## Fig. 5

## Fig. 6

| Codage convolutif | → | Entrelac. | → | F.F.T. | → | Retard variable | → | Emission | → |

12    14    16    17    71    18

73

Contrôle retard    72

## Fig. 7

17    821  822    81    82L

72

Contrôle retard    SELECTION    84

85    83

## Fig. 8

MEMOIRE VIVE    91

92    93

Adr. écrit.    Adr. Lect.

94    95

CONTROLE RETARD    72

## Fig. 9

Fig. 10

Fig. 11

Fig. 12

131A
133A
135
132A
134

Déphasage variable

136

Contrôle déphasage

131B
133B

132B

+

137

Démodulation/ Transposition

138

Fig. 13

131A
133A
142A
143
145

Transposition

141A

144

Contrôle retard

146

Combi- naison

147

Décodage COFDM

148

131B
133B

Transposition

141B

142B

Fig. 14